# EUROPEAN PATENT SPECIFICATION

(11) **EP 3 050 240 B1**
(45) Date of publication and mention of the grant of the patent: **20.10.2021**
(21) Application number: 14790824.8
(22) Date of filing: 26.09.2014
(51) Int. Cl.: H04L 1/18

(54) **REDUCED DELAY HARQ PROCESS TIMELINE FOR FDD-TDD CARRIER AGGREGATION**
HARQ-PROZESSZEITRAHMEN MIT VERRINGERTER VERZÖGERUNG FÜR FDD-TDD-TRÄGERAGGREGATION
CHRONOLOGIE DE PROCESSUS HARQ À RETARD RÉDUIT POUR AGRÉGATION DE PORTEUSES FDD-TDD

(30) Priority: 26.09.2013 US 201361883173 P; 25.09.2014 US 201414497268
(43) Date of publication of application: 03.08.2016
(73) Proprietor: Qualcomm Incorporated, San Diego, CA 92121-1714 (US)
(72) Inventor: GAAL, Peter, San Diego, California 92121-1714 (US); CHEN, Wanshi, San Diego, California 92121-1714 (US); DAMNJANOVIC, Jelena, San Diego, California 92121-1714 (US)
(74) Representative: Dunlop, Hugh Christopher
(86) International application number: PCT/US2014/057656
(87) International publication number: WO 2015/048404

(56) References cited:
- WO-A2-2012/124996
- US-A1- 2012 269 180
- None

## Description

### BACKGROUND

Wireless communication networks are widely deployed to provide various communication services such as voice, video, packet data, messaging, broadcast, and the like. These wireless networks may be multiple-access networks capable of supporting multiple users by sharing the available network resources.

A wireless communication network may include a number of base stations that can support communication for a number of mobile devices. A mobile device may communicate with a base station via downlink (DL) and uplink (UL) transmissions. The downlink (or forward link) refers to the communication link from the base station to the mobile device, and the uplink (or reverse link) refers to the communication link from the mobile device to the base station.

Multiple access technologies may use Frequency Division Duplexing (FDD) or Time Division Duplexing (TDD) to provide uplink and downlink communications over one or more carriers. TDD operation offers flexible deployments without requiring paired spectrum resources. TDD formats include transmission of frames of data, each including a number of different subframes in which different subframes may be uplink or downlink subframes. In systems that operate using TDD, different formats may be used in which uplink and downlink communications may be asymmetric. Flexible TDD DL/UL configuration provides efficient ways to use unpaired spectrum resources and TDD configuration may be adaptive based on traffic conditions (e.g., UL/DL loading at the base station or mobile device).

The wireless communication networks including the base stations and UEs may support operation on multiple carriers which may be called carrier aggregation. Carrier aggregation may be used to increase throughput between a base station supporting multiple component carriers and a mobile device, and mobile devices may be configured to communicate using multiple component carriers associated with multiple base stations. Other techniques for increasing throughput using multiple carriers may be used where base stations performing joint operations have non-ideal backhaul (e.g., dual-connectivity, etc.).

In some instances, transmission errors between mobile devices and base stations are avoided or corrected by utilizing an automatic repeat request (ARQ) scheme. An ARQ scheme may be employed to detect whether a received packet is in error. For example, in an ARQ scheme, a receiver may notify a transmitter with a positive acknowledgment (ACK), when a packet is received free from errors; and the receiver may notify the transmitter with a negative acknowledgment (NAK), if an error is detected. In some case, a hybrid ARQ (HARQ) scheme is employed to correct some errors and to detect and discard certain uncorrectable packets. In some multi-carrier scenarios, however, the overall HARQ delay may cause certain inefficiencies in wireless communications.

### SUMMARY

Methods, systems, and devices are described which minimize HARQ delay for multi-carrier scheduling in a wireless communications network utilizing one or more TDD component carriers and one or more FDD component carriers. HARQ periodicity may be adjusted, and tools and techniques for scheduling TDD UL and DL grants and HARQ indicators may be employed.

A method of wireless communication is described. The method is defined according to claim 1.

An apparatus for wireless communication is also described. The apparatus is defined according to claim 7.

### BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 shows a diagram illustrating an example of a wireless communications system;
FIG. 2 shows a frame structure for a TDD carrier;
FIG. 3 shows a system employing carrier aggregation;
FIGS. 4A and 4B shows a device(s) configured for multi-carrier scheduling;
FIG. 5 shows a block diagram of a MIMO communication system;
FIG. 6 shows a block diagram of a user equipment configured for multi-carrier scheduling;
FIG. 7 shows a system configured for multi-carrier scheduling;
FIGS. 8A-8E show diagrams of multi-carrier scheduling;
FIG. 9 shows a flow diagram of a method(s) of multi-carrier scheduling;
FIG. 10 shows a flow diagram of a method(s) of multi-carrier scheduling;
FIG. 11 shows a flow diagram of a method(s) of multi-carrier scheduling;
FIG. 12 shows a flow diagram of a method(s) of multi-carrier scheduling; and
FIG. 13 shows a flow diagram of a method(s) of multi-carrier scheduling.

### DETAILED DESCRIPTION

Described examples are directed to methods, systems, and devices that minimize HARQ delay for multi-carrier scheduling in a wireless communications network utilizing one or more TDD component carriers and one or more FDD component carriers. The methods, systems, and devices include tools and techniques for adjusting HARQ periodicity scheduling TDD UL and DL transmission, grants, and transfers to minimize HARQ process round trip time (RTT). Document WO 2012/124996 A2 discloses such a method of the prior art.

Techniques described herein may be used for various wireless communications systems such as cellular wireless systems, Peer-to-Peer wireless communications, wireless local access networks (WLANs), ad hoc networks, satellite communications systems, and other systems. The terms "system" and "network" are often used interchangeably. These wireless communications systems may employ a variety of radio communication technologies such as Code Division Multiple Access (CDMA), Time Division Multiple Access (TDMA), Frequency Division Multiple Access (FDMA), Orthogonal FDMA (OFDMA), Single-Carrier FDMA (SC-FDMA), or other radio technologies. Generally, wireless communications are conducted according to a standardized implementation of one or more radio communication technologies called a Radio Access Technology (RAT). A wireless communications system or network that implements a Radio Access Technology may be called a Radio Access Network (RAN).

Examples of Radio Access Technologies employing CDMA techniques include CDMA2000, Universal Terrestrial Radio Access (UTRA), etc. CDMA2000 covers IS-2000, IS-95, and IS-856 standards. IS-2000 Releases 0 and A are commonly referred to as CDMA2000 IX, IX, etc. IS-856 (TIA-856) is commonly referred to as CDMA2000 1xEV-DO, High Rate Packet Data (HRPD), etc. UTRA includes Wideband CDMA (WCDMA) and other variants of CDMA. Examples of TDMA systems include various implementations of Global System for Mobile Communications (GSM). Examples of Radio Access Technologies employing OFDM or OFDMA include Ultra Mobile Broadband (UMB), Evolved UTRA (E-UTRA), IEEE 802.11 (Wi-Fi), IEEE 802.16 (WiMAX), IEEE 802.20, Flash-OFDM, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies.

The scope of the invention is defined in the appended claims.

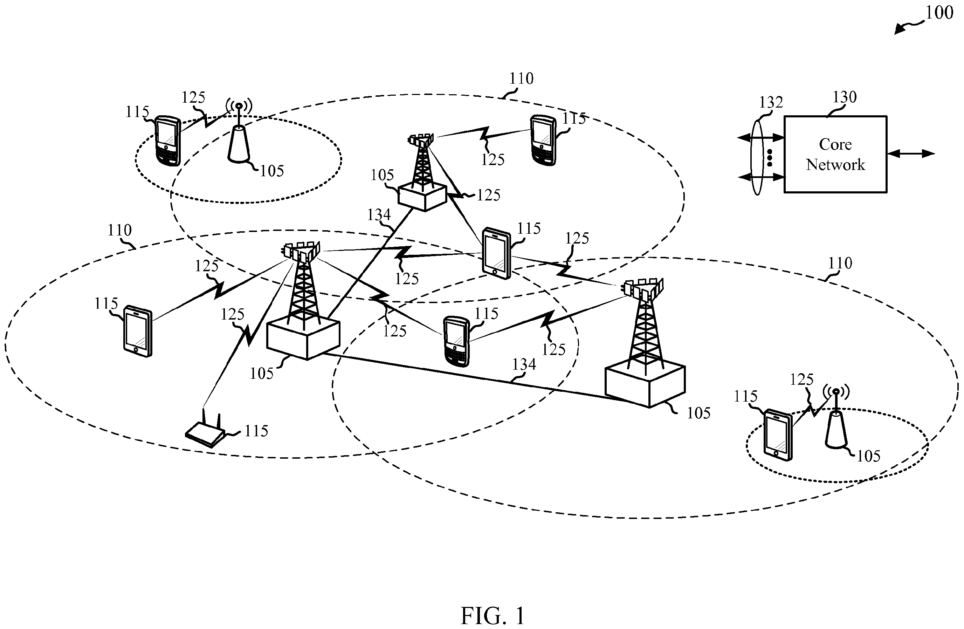

Referring first to **FIG. 1****,** a diagram illustrates an example of a wireless communications system 100. The system 100 includes base stations (or cells) 105, communication devices 115, and a core network 130. The base stations 105 may communicate with the communication devices 115 under the control of a base station controller (not shown), which may be part of the core network 130 or the base stations 105 in various embodiments. Base stations 105 may communicate control information and user data with the core network 130 through backhaul links 132. Backhaul links 132 may be wired backhaul links (*e.g.,* copper, fiber, etc.) or wireless backhaul links (*e.g.,* microwave, etc.). In embodiments, the base stations 105 may communicate, either directly or indirectly, with each other over backhaul links 134, which may be wired or wireless communication links. The system 100 may support operation on multiple carriers (waveform signals of different frequencies). Multi-carrier transmitters can transmit modulated signals simultaneously on the multiple carriers. For example, each communication link 125 may be a multi-carrier signal modulated according to the various radio technologies described above. Each modulated signal may be sent on a different carrier and may carry control information (*e.g*., reference signals, control channels, etc.), overhead information, data, etc.

The base stations 105 may wirelessly communicate with the devices 115 via one or more base station antennas. Each of the base station 105 sites may provide communication coverage for a respective coverage area 110. In some embodiments, base stations 105 may be referred to as a base transceiver station, a radio base station, an access point, a radio transceiver, a basic service set (BSS), an extended service set (ESS), a NodeB, eNodeB (eNB), Home NodeB, a Home eNodeB, or some other suitable terminology. The coverage area 110 for a base station may be divided into sectors making up only a portion of the coverage area (not shown). The system 100 may include base stations 105 of different types (*e.g*., macro, micro, or pico base stations). There may be overlapping coverage areas for different technologies.

The communication devices 115 are dispersed throughout the wireless network 100, and each device may be stationary or mobile. A communication device 115 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a user equipment, a mobile client, a client, or some other suitable terminology. A communication device 115 may be a cellular phone, a personal digital assistant (PDA), a wireless modem, a wireless communication device, a handheld device, a tablet computer, a laptop computer, a cordless phone, a wireless local loop (WLL) station, or the like. A communication device may be able to communicate with macro base stations, pico base stations, femto base stations, relay base stations, and the like.

The transmission links 125 shown in network 100 may include uplink (UL) transmissions from a mobile device 115 to a base station 105, or downlink (DL) transmissions, from a base station 105 to a mobile device 115. The downlink transmissions may also be called forward link transmissions while the uplink transmissions may also be called reverse link transmissions.

In embodiments, the system 100 is an LTE/LTE-A network. In LTE/LTE-A networks, the terms evolved Node B (eNB) and user equipment (UE) may be generally used to describe the base stations 105 and communication devices 115, respectively. The system 100 may be a Heterogeneous LTE/LTE-A network in which different types of eNBs provide coverage for various geographical regions. For example, each eNB 105 may provide communication coverage for a macro cell, a pico cell, a femto cell, or other types of cell. A macro cell generally covers a relatively large geographic area (e.g., several kilometers in radius) and may allow unrestricted access by UEs with service subscriptions with the network provider. A pico cell would generally cover a relatively smaller geographic area and may allow unrestricted access by UEs with service subscriptions with the network provider. A femto cell would also generally cover a relatively small geographic area *(e.g.,* a home) and, in addition to unrestricted access, may also provide restricted access by UEs having an association with the femto cell *(e.g.,* UEs in a closed subscriber group (CSG), UEs for users in the home, and the like). An eNB for a macro cell may be referred to as a macro eNB. An eNB for a pico cell may be referred to as a pico eNB. And, an eNB for a femto cell may be referred to as a femto eNB or a home eNB. An eNB may support one or multiple (e.g., two, three, four, and the like) cells.

The communications system 100 according to an LTE/LTE-A network architecture may be referred to as an Evolved Packet System (EPS) 100. The EPS 100 may include one or more UEs 115, an Evolved UMTS Terrestrial Radio Access Network (E-UTRAN), an Evolved Packet Core (EPC) 130 *(e.g.,* core network 130), a Home Subscriber Server (HSS), and an Operator's IP Services. The EPS may interconnect with other access networks using other Radio Access Technologies. For example, EPS 100 may interconnect with a UTRAN-based network or a CDMA-based network via one or more Serving GPRS Support Nodes (SGSNs). To support mobility of UEs 115 or load balancing, EPS 100 may support handover of UEs 115 between a source eNB 105 and a target eNB 105. EPS 100 may support intra-RAT handover between eNBs 105 or base stations of the same RAT (e.g., other E-UTRAN networks), and inter-RAT handovers between eNBs or base stations of different RATs *(e.g.,* E-UTRAN to CDMA, etc.). The EPS 100 may provide packet-switched services, however, as those skilled in the art will readily appreciate, the various concepts presented throughout this disclosure may be extended to networks providing circuit-switched services.

The E-UTRAN may include the eNBs 105 and may provide user plane and control plane protocol terminations toward the UEs 115. The eNBs 105 may be connected to other eNBs 105 via backhaul link 134 *(e.g.,* an X2 interface, and the like). The eNBs 105 may provide an access point to the EPC 130 for the UEs 115. The eNBs 105 may be connected by backhaul link 132 *(e.g.,* an S1 interface, and the like) to the EPC 130. Logical nodes within EPC 130 may include one or more Mobility Management Entities (MMEs), one or more Serving Gateways, and one or more Packet Data Network (PDN) Gateways (not shown). Generally, the MME may provide bearer and connection management. All user IP packets may be transferred through the Serving Gateway, which itself may be connected to the PDN Gateway. The PDN Gateway may provide UE IP address allocation as well as other functions. The PDN Gateway may be connected to IP networks and the operator's IP Services. These logical nodes may be implemented in separate physical nodes or one or more may be combined in a single physical node. The IP Networks/Operator's IP Services may include the Internet, an Intranet, an IP Multimedia Subsystem (IMS), or a Packet-Switched (PS) Streaming Service (PSS).

The UEs 115 may be configured to collaboratively communicate with multiple eNBs 105 through, for example, Multiple Input Multiple Output (MIMO), Coordinated Multi-Point (CoMP), or other schemes. MIMO techniques use multiple antennas on the base stations or multiple antennas on the UE to take advantage of multipath environments to transmit multiple data streams. CoMP includes techniques for dynamic coordination of transmission and reception by a number of eNBs to improve overall transmission quality for UEs as well as increasing network and spectrum utilization. Generally, CoMP techniques utilize backhaul links 132 or 134 for communication between base stations 105 to coordinate control plane and user plane communications for the UEs 115.

The communication networks that may accommodate some of the various disclosed embodiments may be packet-based networks that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use hybrid automatic repeat request (HARQ) techniques to provide retransmission at the MAC layer to ensure reliable data transmission. In the control plane, the Radio Resource Control (RRC) protocol layer may provide establishment, configuration, and maintenance of an RRC connection between the UE and the network used for the user plane data. At the Physical layer, the transport channels may be mapped to Physical channels.

The downlink physical channels may include at least one of a physical downlink control channel (PDCCH) or enhanced PDCCH (EPDCCH), a physical HARQ indicator channel (PHICH), and a physical downlink shared channel (PDSCH). The uplink physical channels may include at least one of a physical uplink control channel (PUCCH) and a physical uplink shared channel (PUSCH). The PDCCH may carry downlink control information (DCI), which may indicate data transmissions for UEs on the PDSCH as well as provide UL resource grants to UEs for the PUSCH. The UE may transmit control information in the PUCCH on the assigned resource blocks in the control section. The UE may transmit only data or both data and control information in the PUSCH on the assigned resource blocks in the data section.

LTE/LTE-A utilizes orthogonal frequency division multiple-access (OFDMA) on the downlink and single-carrier frequency division multiple-access (SC-FDMA) on the uplink. An OFDMA or SC-FDMA carrier may be partitioned into multiple (K) orthogonal subcarriers, which are also commonly referred to as tones, bins, or the like. Each subcarrier may be modulated with data. The spacing between adjacent subcarriers may be fixed, and the total number of subcarriers (K) may be dependent on the system bandwidth. For example, K may be equal to 72, 180, 300, 600, 900, or 1200 with a subcarrier spacing of 15 kilohertz (KHz) for a corresponding system bandwidth (with guardband) of 1.4, 3, 5, 10, 15, or 20 megahertz (MHz), respectively. The system bandwidth may also be partitioned into sub-bands. For example, a sub-band may cover 1.08 MHz, and there may be 1, 2, 4, 8 or 16 sub-bands.

The carriers may transmit bidirectional communications using FDD (e.g., using paired spectrum resources) or TDD operation *(e.g.,* using unpaired spectrum resources). Frame structures for FDD *(e.g.,* frame structure type 1) and TDD *(e.g.,* frame structure type 2) may be defined. Time intervals may be expressed in multiples of a basic time unit *Tₛ* = 1/30720000. Each frame structure may have a radio frame length *T_{f}* = 307200 · *Tₛ =* 10 ms and may include two half-frames or slots of length 153600 · *Tₛ* = 5 *ms* each. Each half-frame may include five subframes of length 30720 · *Tₛ =* 1 *ms.*

LTE/LTE-A networks support multi-process Type II HARQ with a configurable number of independent HARQ processes. Each HARQ process waits to receive an acknowledgement (ACK) before transmitting a new data or transport block. LTE/LTE-A uses asynchronous HARQ transmission on the downlink and synchronous HARQ transmission on the uplink. In both asynchronous and synchronous HARQ, ACK/NAK information may be provided a certain number of subframes after a DL or UL transmission. Generally, for LTE/LTE-A FDD carriers, ACK/NAK information for a HARQ process is transmitted 4 subframes after a data transmission. In asynchronous HARQ, a DL or UL scheduled for subsequent transmissions is not predetermined and the eNB provides instructions to the UE regarding which HARQ process are transmitted in each subframe. For synchronous HARQ in FDD, UEs perform a second transmission of a particular HARQ process a predetermined number of subframes after receiving a NAK. Generally, for LTE/LTE-A FDD carriers subsequent UL transmissions of the same HARQ process occur 4 subframes after receiving a NAK. For synchronous HARQ in TDD, ACK/NAK information may be received in a subframe *i* associated with UL transmissions in a subframe *i-k,* where *k* may be defined according to TDD DL/UL configuration. Subsequent transmissions of particular HARQ processes may be performed in a subframe n for a NAK received in a subframe *n-k,* where *k* may be defined according to TDD UL/DL configuration.

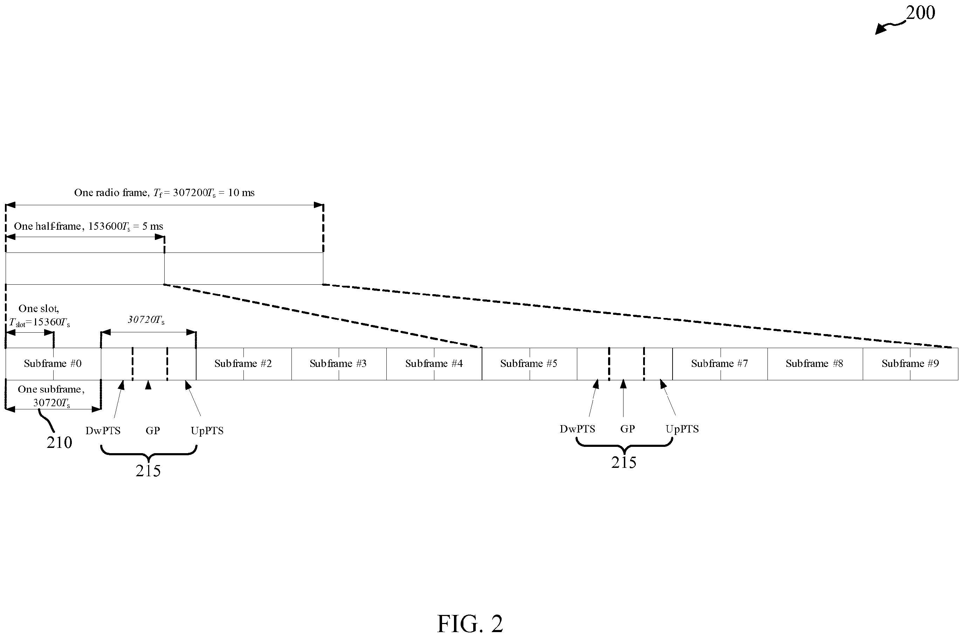

**FIG.** 2 illustrates a frame structure 200 for a TDD carrier. For TDD frame structures, each subframe 210 may carry UL or DL traffic, and special subframes ("S") 215 may be used to switch between DL to UL transmission. Allocation of UL and DL subframes within radio frames may be symmetric or asymmetric and may be reconfigured semi-statically or dynamically. Special subframes 215 may carry some DL and UL traffic and may include a Guard Period (GP) between DL and UL traffic. Switching from UL to DL traffic may be achieved by setting timing advance at the UEs without the use of Special subframes or a guard period between UL and DL subframes. TDD configurations with switch-point periodicity equal to the frame period *(e.g.,* 10 ms) or half of the frame period *(e.g.,* 5 ms) may be supported. For example, TDD frames may include one or more Special frames, and the period between Special frames may determine the TDD DL-to-UL switch-point periodicity for the frame.

For LTE/LTE-A, seven different TDD DL/UL configurations are defined that provide between 40% and 90% DL subframes as illustrated in Table 1.

**Table 1: TDD Configurations**

| **TDD Configuration** | **Period (ms)** | **Subframe** | | | | | | | | | |
|---|---|---|---|---|---|---|---|---|---|---|---|
| | | **0** | **1** | **2** | **3** | **4** | **5** | **6** | **7** | **8** | **9** |
| 0 | 5 | D | S | U | U | U | D | S | U | U | U |
| 1 | 5 | D | S | U | U | D | D | S | U | U | D |
| 2 | 5 | D | S | U | D | D | D | S | U | D | D |
| 3 | 10 | D | S | U | U | U | D | D | D | D | D |
| 4 | 10 | D | S | U | U | D | D | D | D | D | D |
| 5 | 10 | D | S | U | D | D | D | D | D | D | D |
| 6 | 5 | D | S | U | U | U | D | S | U | U | D |

Because some TDD DL/UL configurations have fewer UL subframes than DL subframes, several techniques may be used to transmit ACK/NAK information for an association set within a PUCCH transmission in the uplink subframe. For example, bundling may be used to combine ACK/NAK information to reduce the amount of ACK/NAK information to be sent. ACK/NAK bundling may combine the ACK/NAK information into a single bit that is set to an acknowledgement (ACK) value only if the ACK/NAK information for each subframe of the association set is an ACK. For example, ACK/NAK information may be a binary '1' to represent ACK and a binary '0' to represent a negative acknowledgement (NAK) for a particular subframe. ACK/NAK information may be bundled using a logical AND operation on the ACK/NAK bits of the association set. Bundling reduces the amount of information to be sent over the PUCCH and therefore increases the efficiency of HARQ ACK/NAK feedback. Multiplexing may be used to transmit multiple bits of ACK/NAK information in one uplink subframe. For example, up to four bits of ACK/NAK may be transmitted using PUCCH format 1b with channel selection.

Wireless network 100 may support operation on multiple carriers, which may be referred to as carrier aggregation (CA) or multi-carrier operation. A carrier may also be referred to as a component carrier (CC), a layer, a channel, etc. The terms "carrier," "layer," "CC," and "channel" may be used interchangeably herein. A carrier used for the downlink may be referred to as a downlink CC, and a carrier used for the uplink may be referred to as an uplink CC. A combination of a downlink CC and an uplink CC may be referred to as a cell. It is also possible to have a cell consisting of a downlink CC only. A UE 115 may be configured with multiple downlink CCs and one or more uplink CCs for carrier aggregation. Multi-layer eNBs 105 may be configured to support communications with UEs over multiple CCs on the downlink and uplink. Thus, a UE 115 may receive data and control information on one or more downlink CCs from one multi-layer eNB 105 or from multiple eNBs 105 (e.g., single or multi-layer eNBs). The UE 115 may transmit data and control information on one or more uplink CCs to one or more eNBs 105. Carrier aggregation may be used with both FDD and TDD component carriers. For DL carrier aggregation, multiple bits of ACK/NAK are fed back when multiple DL transmissions occur in one subframe. Up to 22 bits of ACK/NAK may be transmitted using PUCCH format 3 for DL carrier aggregation.

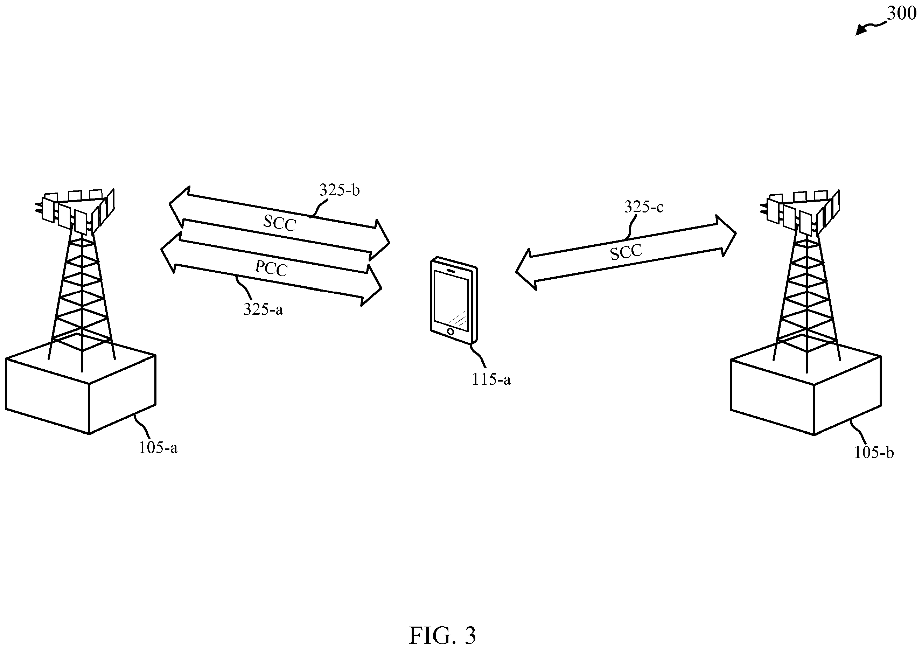

**FIG. 3** shows a system 300 employing carrier aggregation in accordance with various embodiments. The system 300 may illustrate aspects of the system 100. The system 300 can include one or more eNBs 105 using one or more component carriers 325 (CC₁-CC_{N}) to communicate with UEs 115. The eNBs 105 can transmit information to the UEs 115 over forward (downlink) channels on component carriers 325. In addition, the UEs 115 can transmit information to the eNB 105-a over reverse (uplink) channels on component carriers 325. In describing the various entities of FIG. 3, as well as other figures associated with some of the disclosed embodiments, for the purposes of explanation, the nomenclature associated with a 3GPP LTE or LTE-A wireless network is used. However, it is to be appreciated that the system 300 can operate in other networks such as, but not limited to, an OFDMA wireless network, a CDMA network, a 3GPP2 CDMA2000 network and the like. One or more of the component carriers CC₁-CC_{N} 325 can be in the same frequency operating band (intra-band) or in different operating bands (inter-band) and intra-band CCs can be contiguous or non-contiguous within the operating band.

In the system 300, UEs 115 may be configured with multiple CCs associated with one or more eNBs 105. One CC is designated as the primary CC (PCC) for a UE 115. PCCs may be semi-statically configured by higher layers (e.g., RRC, etc.) on a per-UE basis. Certain uplink control information (UCI) (e.g., ACK/NAK, channel quality information (CQI), scheduling requests (SR), etc.), when transmitted on PUCCH, are carried by the PCC. Thus, UL SCC's may not be used for PUCCH for a given UE. The UEs 115 may be configured with asymmetric DL to UL CC assignments. In LTE/LTE-A, up to 5:1 DL to UL mapping is supported. Thus, one UL CC (e.g., PCC UL) may carry UCI (e.g., ACK/NAK) on PUCCH for up to 5 DL CCs.

In the example illustrated in FIG. 3, UE 115-a is configured with PCC 325-a and SCC 325-b associated with eNB 105-a and SCC 325-c associated with eNB 105-b. The system 300 may be configured to support carrier aggregation using various combinations of FDD and TDD CCs 325. For example, some configurations of system 300 may support CA for FDD CCs (e.g., an FDD PCC and one or more FDD SCCs). Other configurations may support CA using TDD CCs (e.g., a TDD PCC and one or more TDD SCCs). In some examples, the TDD SCCs for CA have the same DL/UL configuration while other examples support TDD CA with CCs of different DL/UL configurations.

In some embodiments, the system 300 may support TDD-FDD joint operation, including CA and other types of joint operation (e.g., dual-connectivity when eNBs 105 of the multiple CCs configured for a UE 115 have reduced backhaul capabilities, etc.). TDD-FDD joint operation may allow UEs 115 supporting FDD and TDD CA operation to access both FDD and TDD CCs using CA or in single CC mode. In addition, legacy UEs with various capabilities (e.g., single mode UEs, FDD CA capable UEs, TDD CA capable UEs, etc.), may connect to FDD or TDD carriers of system 300.

In CA scenarios employing a TDD CC and an FDD CC, HARQ UL processes may follow a TDD timeline. In cases of cross-carrier scheduling utilizing an FDD PCC, an UL HARQ process on a TDD SCC may follow the timeline of the FDD PCC. For example, on the DL, a data transmission and corresponding grant for the TDD CC may be sent in the same subframe. Then an ACK/NAK for the TDD DL data transmission may be sent four milliseconds (4 ms) later via the UL FDD PCC. On the UL, a TDD UL transmission may be sent 4 ms after the grant or a NAK on the FDD PCC. Then, an ACK/NAK for the TDD UL subframe may be sent 4 ms later. Thus, the scheduling may generally include 4 ms gaps between a grant, UL transmissions, and ACK/NAKs.

In some instances, feedback delay may be minimized for FDD PCC and TDD SCC cross-carrier scheduling by employing scheduling with these 4 ms gaps. In other cases, however, an FDD HARQ timeline aligns with a TDD SCC subframe timeline in a manner such that overall HARQ RTT is substantially greater than the FDD HARQ timeline. If, for instance, an UL HARQ process with an eight millisecond (8 ms) periodicity is used with the TDD SCC following the FDD PCC HARQ timeline, and the TDD SCC has ten millisecond (10 ms) radio frame configuration, a HARQ UL retransmission for a specific HARQ process may occur several frames after an initial transmission. By way of example, in a cross-carrier scenario involving an FDD PCC with an 8 ms HARQ process, a TDD SCC utilizing a DL-UL configuration 5 would realize a forty millisecond (40 ms) HARQ retransmission RTT, if scheduled according to the typical FDD HARQ 4 ms spacing described above.

In order to minimize the HARQ RTT, a TDD SCC HARQ process periodicity with an FDD PCC is adjusted to correspond to the subframe periodicity of a TDD SCC. UL transmissions and ACK/NAK transfers are scheduled accordingly.

A scheduling timing between a first uplink grant and a corresponding uplink transmission for the TDD SCC is determined based on a scheduling timing of the FDD PCC. A number of UL HARQ processes are determined based on a DL/UL configuration of the TDD SCC. Then UL transmissions and ACK/NAK transfers are made according to the determined scheduling timing and the determined number of uplink HARQ processes. In the embodiments of the claimed invention, an HARQ process timeline of the TDD SCC is adjusted such that the aggregate of the number of subframes between data transmissions and corresponding ACK/NAK indicators, and the number of subframes between ACK/NAK indicators and HARQ process retransmissions corresponds to the number of subframes in a frame period of the TDD SCC. In the embodiments, HARQ process timelines are adjusted for HARQ processes of the TDD SCC that are cross-carrier scheduled on the FDD PCC. In other embodiments, HARQ process timelines are adjusted for all HARQ processes including HARQ processes scheduled on the FDD PCC.

In one embodiment, scheduling timing for the joint FDD PCC and TDD SCC CA includes: sending a TDD UL sub frame 4 ms after a PDCCH grant; receiving an ACK/NAK (*e.g.,* PHICH), which may be sent 4 ms after the TDD UL subframe; and sending a subsequent TDD UL subframe 6 ms after a NAK. Such HARQ rules may be applied to various TDD DL-UL configurations. Additionally, the number of UL HARQ processes for a TDD SCC with an FDD PCC may be based on the TDD SCC DL/UL configuration.

Other scheduling timing may also lead to reductions in HARQ delay. For example, a TDD UL subframe is sent 4 ms after a PDCCH grant, then a PHICH ACK/NAK is sent 6 ms after the TDD UL subframe, and a subsequent TDD UL subframe is sent 4 ms after a PHICH NAK.

In alternative embodiments falling outside the scope of the claimed invention, an ACK/NAK may be overwritten by a subsequent grant sent on PDCCH. In some cases, a grant on PDCCH sent two milliseconds (2 ms) (*e.g.,* 2 subframes) after an ACK/NAK may overwrite the ACK/NAK. For example, if the PHICH NAK is received in a current subframe, *n*, and a corresponding HARQ retransmission would be scheduled for 6 ms later in subframe n+6 (as previously described), the HARQ retransmission may be superseded or overwritten when it would coincide with an UL transmission scheduled by a PDCCH received in subframe *n*+2 (also scheduled to occur in subframe n+6 due to the 4 ms spacing). In other embodiments, a grant sent in the same subframe as the ACK/NAK may overwrite the ACK/NAK.

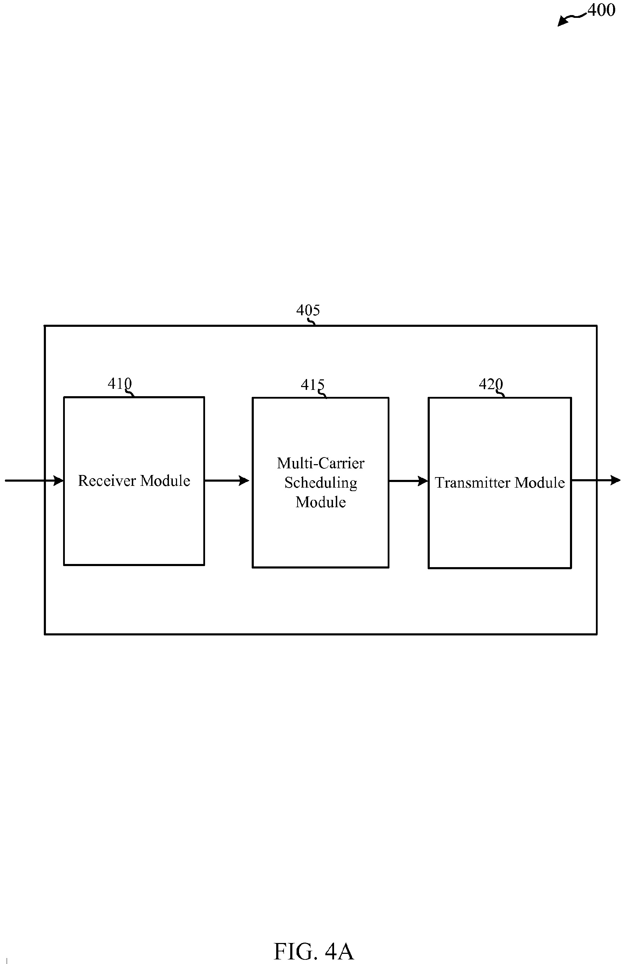

Turning next to **FIG. 4A****,** which shows a block diagram 400 of a device 405 for multi-carrier scheduling in accordance with various embodiments. Device 405 may illustrate, for example, aspects of UEs 115 illustrated in FIG. 1 or FIG. 3. Additionally or alternatively, device 405 may illustrate aspects of eNBs 105 described with reference to FIG. 1 or FIG. 3. Device 405 may include a receiver module 410, a multi-carrier scheduling module 415, and a transmitter module 420. Each of these components may be in communication with each other. In some embodiments, device 405 is a processor.

Device 405 may be configured for operation in a CA scheme including a TDD CC and an FDD CC. In some cases, the multi-carrier scheduling module 415 is configured to determine, based on an FDD PCC, a scheduling time between a control channel transfer (e.g., a grant on PDCCH or EPDCCH of the FDD PCC) and a corresponding UL transmission on a TDD SCC. The multi-carrier scheduling module 415 also may be configured to determine a number of UL HARQ processes of the TDD SCC based on a DL/UL configuration of the TDD SCC.

The receiver module 410 may receive a resource grant on PDCCH, and the transmitter module 420 may transmit a TDD UL subframe according to the grant. The receiver module 410 may also receive an ACK/NAK on PHICH, and the transmitter module 420 may transmit a subsequent TDD UL subframe in response to a received NAK. In some cases, the receiver module 410 may receive a grant on PDCCH that overwrites an earlier received ACK/NAK.

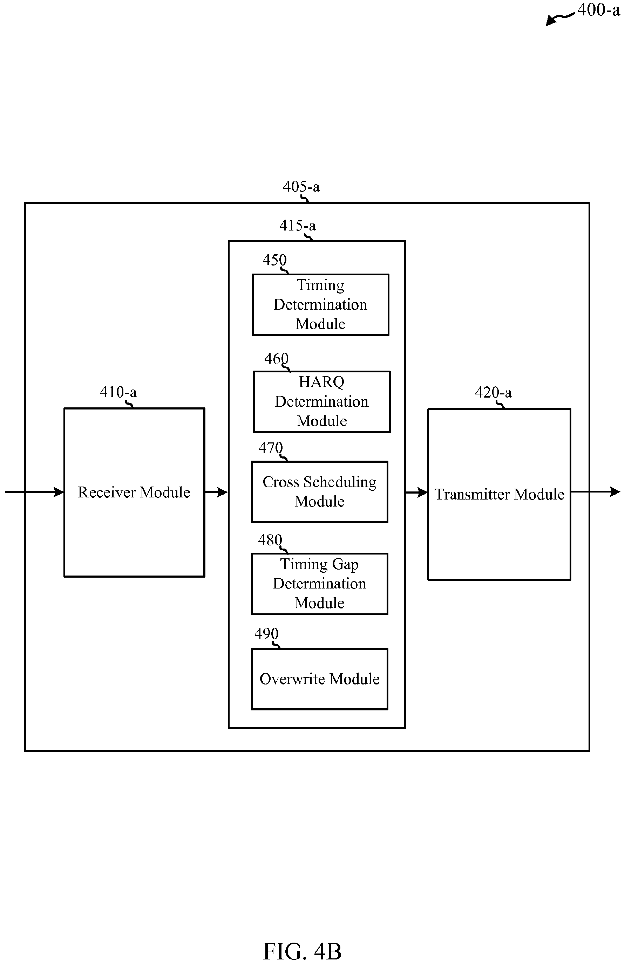

Next, **FIG. 4B** shows a block diagram 400-a of a device 405-a for multi-carrier scheduling in accordance with various embodiments. Device 405-a may illustrate, for example, aspects of UEs 115 illustrated in FIG. 1 or FIG. 3. In some cases, device 405-a illustrates aspects of eNBs 105 described with reference to FIG. 1 or FIG. 3. Device 405 may include a receiver module 410-a, a multi-carrier scheduling module 415-a, and a transmitter module 420-a. Each of these components may be in communication with each other; and each may perform substantially the same functions as the corresponding modules illustrated in FIG. 4A. According to some embodiments, device 405-a is a processor.

The multi-channel scheduling module 415-a may be configured with a timing determination module 450, a HARQ determination module 460, a cross scheduling module 470, a time gap determination module 480, and an overwrite module 490. The modules, alone or in combination, may be means for performing various functions described herein. For example, the timing determination module may be configured to determine a scheduling timing between a first control channel transfer and a corresponding uplink transmission for a TDD SCC based on a scheduling timing for an FDD PCC. In some cases, the timing determination module 450 determines (e.g., establishes or identifies) a 4 ms gap between a grant on PDCCH and a corresponding UL transmission.

The HARQ determination module 460 may be configured to determine a number of uplink HARQ processes for a TDD CC based on a DL/UL configuration of the TDD CC. For example, the HARQ determination module 460 may determine the number of uplink HARQ processes for the TDD SCC is equal to a number of uplink subframes in a frame of the TDD SCC. In some embodiments, a determined number of UL subframes of a common UL HARQ process includes a ten millisecond (10 ms) gap.

The receiver module 410-a and the transmitter module 420-a may receive and transmit, respectively, control and data signals according to the determined scheduling timing and the determined uplink HARQ processes.

In some embodiments, the cross scheduling module 470 may be configured to cross schedule component carriers, such that the DL/UL transmission on one CC are based on grants carried by another CC. For example, UL transmissions of a TDD SCC may be based on grants from another CC (e.g., FDD PCC, etc.).

The timing gap determination module 480 may be configured to determine a gap between HARQ indicator transfers and UL transmissions. For example, the timing gap determination module 480 may determine a timing gap between a UL transmission and a corresponding ACK/NAK. In some cases, the determined timing gap is 6 ms. In other embodiments, the determined timing gap is 4 ms. Additionally or alternatively, the timing gap determination module 480 may be configured to determine a timing gap between a NAK and a corresponding retransmission. For instance, such a gap me be 6 ms, or it may be 4 ms.

In some embodiments, the overwrite module 490 is configured to overwrite an ACK/NAK with a subsequent or concurrent grant on, *e.g.,* PDCCH. The overwrite module 490 may be configured to overwrite an HARQ retransmission triggered by an ACK/NAK sent 2 ms or two subframes earlier, when it would coincide with an UL grant scheduled by PDCCH. In other cases, the overwrite module 490 is configure to overwrite an ACK/NAK sent in the same subframe.

The components of the devices 405 and 405-a may, individually or collectively, be implemented with one or more application-specific integrated circuits (ASTCs) adapted to perform some or all of the applicable functions in hardware. Alternatively, the functions may be performed by one or more other processing units (or cores), on one or more integrated circuits. In other embodiments, other types of integrated circuits may be used *(e.g.,* Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

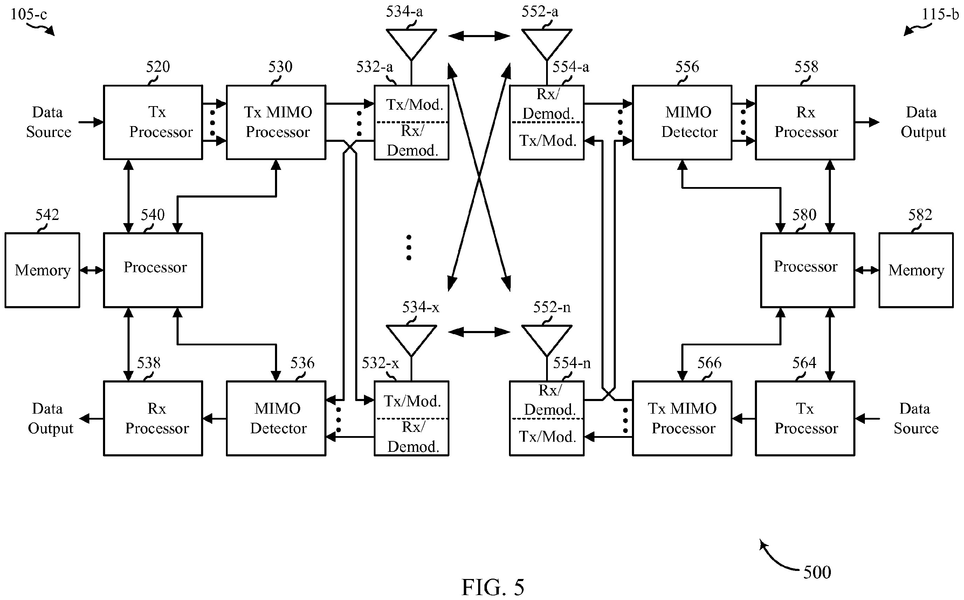

**FIG. 5** is a block diagram of a MIMO communication system 500 including a base station or eNB 105-c and a mobile device or UE 115-b. The base station 105-c may be an example of the base stations 105 of FIG. 1 or FIG. 2, while the mobile device 115-b may be an example of the communication devices 115 of FIG. 1 or FIG. 3. This system 500 may illustrate aspects of the system 100 of FIG. 1 or system 300 or FIG. 3. The base station 105-c may be equipped with *M* antennas 534-a through 534-x, and the mobile device 115-b may be equipped with N antennas 552-a through 552-y. In the system 500, the base station 105-c may employ multiple antenna techniques for transmission over communication links. For example, the base station 105-c may employ transmit diversity to improve robustness of transmissions received by the mobile device 115-b. The mobile device 115-b may employ receive diversity using multiple receive antennas to combine signals received at multiple antennas.

At the base station 105-c, a transmit (Tx) processor 520 may receive data from a data source. The transmit processor 520 may process the data. The transmit processor 520 may also generate reference symbols, and a cell-specific reference signal. A transmit (Tx) MIMO processor 530 may perform spatial processing (e.g., precoding) on data symbols, control symbols, or reference symbols, if applicable, and may provide output symbol streams to the transmit modulators 532-a through 532-m. Each modulator 532 may process a respective output symbol stream (e.g., for OFDM, etc.) to obtain an output sample stream. Each modulator 532 may further process (e.g., convert to analog, amplify, filter, and upconvert) the output sample stream to obtain a downlink (DL) signal. In one example, DL signals from modulators 532-a through 532-m may be transmitted via the antennas 534-a through 534-x, respectively.

At the mobile device 115-b, the mobile device antennas 552-a through 552-n may receive the DL signals from the base station 105-c and may provide the received signals to the demodulators 554-a through 554-n, respectively. Each demodulator 554 may condition *(e.g.,* filter, amplify, downconvert, and digitize) a respective received signal to obtain input samples. Each demodulator 554 may further process the input samples (e.g., for OFDM, etc.) to obtain received symbols. A MIMO detector 556 may obtain received symbols from all the demodulators 554-a through 554-n, perform MIMO detection on the received symbols if applicable, and provide detected symbols. A receive (Rx) processor 558 may process *(e.g.,* demodulate, deinterleave, and decode) the detected symbols, providing decoded data for the mobile device 115-b to a data output, and provide decoded control information to a processor 580, or memory 582.

The base station 105-c or the mobile device 115-b may employ multi-carrier scheduling. By way of example, either processor 540 or processor 580, or both, may determine the number of HARQ processes and HARQ process timelines based on an FDD-TDD CA configuration. For example, HARQ process timelines for HARQ processes using cross carrier scheduling may be adjusted to correspond to the number of subframes in a frame of a TDD SCC. In some examples, the number of UL HARQ for a TDD SCC processes may be determined based on a DL/UL configuration of the TDD SCC. Then UL transmissions and ACK/NAK transfers may be made according to the determined scheduling timing and the determined number of uplink HARQ processes.

On the uplink (UL), at the mobile device 115-b, a transmit (Tx) processor 564 may receive and process data from a data source or a processor 540 coupled with memory 542. The transmit processor 564 may also generate reference symbols for a reference signal. The symbols from the transmit processor 564 may be precoded by a transmit (Tx) MIMO processor 566 if applicable, further processed by the demodulators 554-a through 554-n *(e.g.,* for SC-FDMA, etc.), and be transmitted to the base station 105-c in accordance with the transmission parameters received from the base station 105-c. At the base station 105-c, the UL signals from the mobile device 115-b may be received by the antennas 534, processed by the demodulators 532, detected by a MIMO detector 536 if applicable, and further processed by a receive (Rx) processor 538. The receive processor 538 may provide decoded data to a data output and to the processor 540.

The components of the base station 105-c may, individually or collectively, be implemented with one or more Application Specific Integrated Circuits (ASICs) adapted to perform some or all of the applicable functions in hardware. Each of the noted modules may be a means for performing one or more functions related to operation of the system 1000. Similarly, the components of the mobile device 115-b may, individually or collectively, be implemented with one or more Application Specific Integrated Circuits (ASICs) adapted to perform some or all of the applicable functions in hardware. Each of the noted components may be a means for performing one or more functions related to operation of the system 1000.

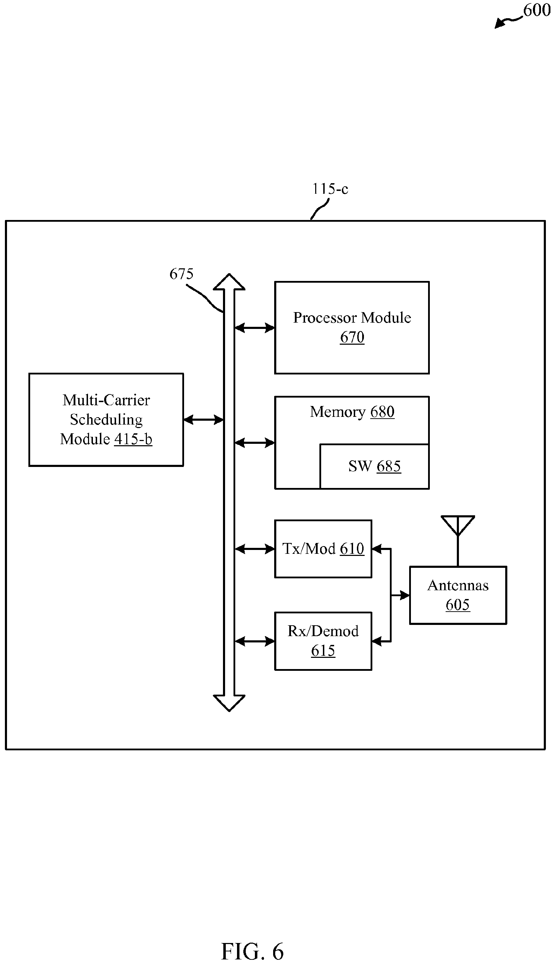

Turning now to **FIG. 6****,** a block diagram 600 of a mobile device 115-c configured for HARQ in FDD-TDD CA in accordance with various embodiments. The mobile device 115-c may have any of various configurations, such as personal computers (e.g., laptop computers, netbook computers, tablet computers, etc.), cellular telephones, PDAs, smartphones, digital video recorders (DVRs), internet appliances, gaming consoles, e-readers, etc. The mobile device 115-c may have an internal power supply (not shown), such as a small battery, to facilitate mobile operation. In some embodiments, the mobile device 115-c may be the mobile devices 115 of FIG. 1, FIG. 3, or FIG. 5.

The mobile device 115-c may generally include components for bi-directional voice and data communications including components for transmitting communications and components for receiving communications. The mobile device 115-c may include a transceiver module 610, antenna(s) 605, memory 680, and a processor module 670, which each may communicate, directly or indirectly, with each other *(e.g.,* via one or more buses 675). The transceiver module 610 may be configured to communicate bi-directionally, via the antenna(s) 605 or one or more wired or wireless links, with one or more networks, as described above. For example, the transceiver module 610 may be configured to communicate bi-directionally with base stations 105 of FIG. 1 or FIG. 3. The transceiver module 610 may include a modem configured to modulate the packets and provide the modulated packets to the antenna(s) 605 for transmission, and to demodulate packets received from the antenna(s) 605. While the mobile device 115-c may include a single antenna 605, the mobile device 115-c may have multiple antennas 605 capable of concurrently transmitting and receiving multiple wireless transmissions. The transceiver module 610 may be capable of concurrently communicating with multiple eNBs 105 via multiple component carriers.

The memory 680 may include random access memory (RAM) and read-only memory (ROM). The memory 680 may store computer-readable, computer-executable software/firmware code 685 containing instructions that are configured to, when executed, cause the processor module 670 to perform various functions described herein *(e.g.,* call processing, database management, capture of handover delay, etc.). Alternatively, the software/firmware code 685 may not be directly executable by the processor module 670 but be configured to cause a computer (e.g., when compiled and executed) to perform functions described herein.

The processor module 670 may include an intelligent hardware device, *e.g.,* a central processing unit (CPU), a microcontroller, an application-specific integrated circuit (ASIC), etc. The mobile device 115-c may include a speech encoder (not shown) configured to receive audio via a microphone, convert the audio into packets *(e.g.,* 20 ms in length, 30 ms in length, etc.) representative of the received audio, provide the audio packets to the transceiver module 610, and provide indications of whether a user is speaking.

According to the architecture of FIG. 6, the mobile device 115-c may further include a multi-carrier scheduling module 415-b, which may be substantially the same as the multi-carrier scheduling devices 415 of FIGS. 4A and 4B. In some cases, the multi-carrier scheduling device 415-b is configured to perform the functions of one or more of the modules 450, 460, 470, 480, or 490 of FIG. 4B. By way of example, the multi-carrier scheduling module 415-b may be a component of the mobile device 115-c in communication with some or all of the other components of the mobile device 115-c via a bus. Alternatively, functionality of these modules may be implemented as a component of the transceiver module 610, as a computer program product, or as one or more controller elements of the processor module 670.

The mobile device 115-c may be configured to perform HARQ for FDD-TDD CA as described above. The components for mobile device 115-c may be configured to implement aspects discussed above with respect to UEs 115 of FIG. 1 or FIG. 3 or devices 405 and 405-a of FIGS. 4A and 4B. For example, the UE 115-c may be configured to determine, based on an FDD-TDD CA configuration, a scheduling time between a control channel transfer (e.g., a grant on PDCCH or EPDCCH) and a corresponding UL transmission for a TDD SCC. The multi-carrier scheduling module 415 also may be configured to determine a number of UL HARQ process of the TDD UL based on a DL/UL configuration of the TDD SCC.

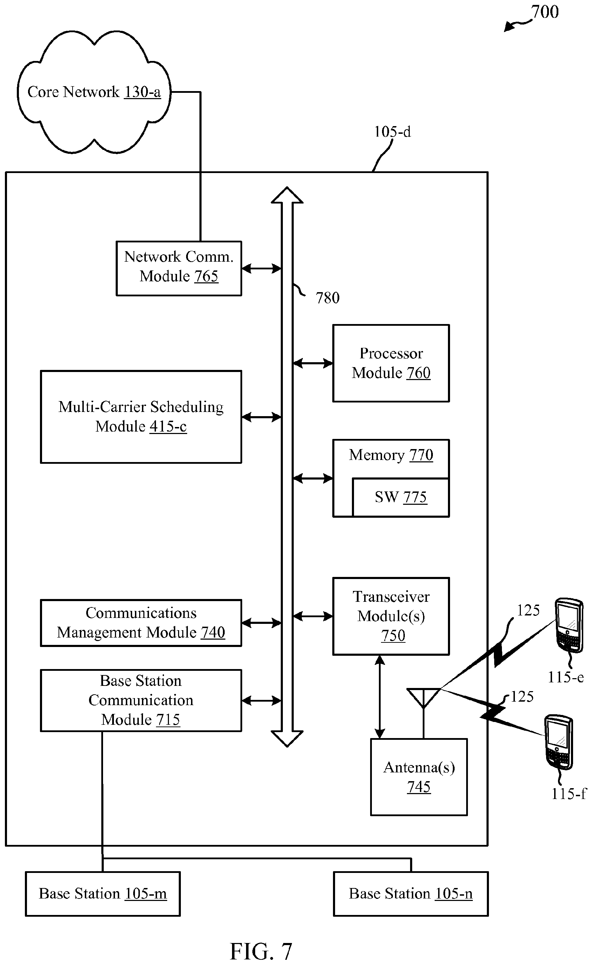

**FIG. 7** shows a block diagram of a communications system 700 that may be configured for multi-carrier scheduling in accordance with various embodiments. This system 700 may be an example of aspects of the systems 100 or 300 depicted in FIG. 1 or FIG. 3. The system 700 includes a base station 105-d configured for communication with UEs 115 over wireless communication links 125. Base station 105-d may be capable of receiving communication links 125 from other base stations (not shown). Base station 105-d may be, for example, an eNB 105 as illustrated in systems 100 or 300.

In some cases, the base station 105-d may have one or more wired backhaul links. Base station 105-d may be, for example, a macro eNB 105 having a wired backhaul link *(e.g.,* S1 interface, etc.) to the core network 130-a. Base station 105-d may also communicate with other base stations 105, such as base station 105-m and base station 105-n via inter-base station communication links *(e.g.,* X2 interface, etc.). Each of the base stations 105 may communicate with UEs 115 using the same or different wireless communications technologies. In some cases, base station 105-d may communicate with other base stations such as 105-m and 105-n utilizing base station communication module 715. In some embodiments, base station communication module 715 may provide an X2 interface within an LTE/LTE-A wireless communication network technology to provide communication between some of the base stations 105. In some embodiments, base station 105-d may communicate with other base stations through core network 130-a. In some cases, the base station 105-d may communicate with the core network 130-a through network communications module 765.

The components for base station 105-d may be configured to implement aspects discussed above with respect to base stations 105 of FIG. 1 and FIG. 3 or devices 405 and 405-a of FIGS. 4A and 4B, and may not be repeated here for the sake of brevity. For example, the base station 105-d may be configured to determine, based on an FDD-TDD CA configuration, a scheduling time between a control channel transfer (e.g., a grant on PDCCH or EPDCCH) and a corresponding UL transmission for a TDD SCC. The multi-carrier scheduling module 415 also may be configured to determine a number of UL HARQ processes of the TDD UL based on a DL/UL configuration of the TDD SCC.

The base station 105-d may include antennas 745, transceiver modules 750, memory 770, and a processor module 760, which each may be in communication, directly or indirectly, with each other *(e.g.,* over bus system 780). The transceiver modules 750 may be configured to communicate bi-directionally, via the antennas 745, with the UEs 115, which may be multi-mode devices. The transceiver module 750 (or other components of the base station 105-d) may also be configured to communicate bi-directionally, via the antennas 745, with one or more other base stations (not shown). The transceiver module 750 may include a modem configured to modulate the packets and provide the modulated packets to the antennas 745 for transmission, and to demodulate packets received from the antennas 745. The base station 105-d may include multiple transceiver modules 750, each with one or more associated antennas 745.

The memory 770 may include random access memory (RAM) and read-only memory (ROM). The memory 770 may also store computer-readable, computer-executable software code 775 containing instructions that are configured to, when executed, cause the processor module 760 to perform various functions described herein *(e.g.,* call processing, database management, message routing, etc.). Alternatively, the software 775 may not be directly executable by the processor module 760 but be configured to cause the computer, *e.g.,* when compiled and executed, to perform functions described herein.

The processor module 760 may include an intelligent hardware device, *e.g.,* a central processing unit (CPU), a microcontroller, an application-specific integrated circuit (ASIC), etc. The processor module 760 may include various special purpose processors such as encoders, queue processing modules, base band processors, radio head controllers, digital signal processors (DSPs), and the like.

According to the architecture of FIG. 7, the base station 105-d may further include a communications management module 740. The communications management module 740 may manage communications with other base stations 105. The communications management module may include a controller or scheduler for controlling communications with UEs 115 in cooperation with other base stations 105. For example, the communications management module 740 may perform scheduling for transmissions to UEs 115 or various interference mitigation techniques such as beamforming or joint transmission.

Additionally or alternatively, the base station 105-d may include a multi-carrier scheduling module 415-c, which may be configured substantially the same as devices 415 and 415-b of FIGS. 4A and 4B. In some cases, the multi-carrier scheduling device 415-c is configured to perform the functions of at least one of the modules 450, 460, 470, 480, or 490 of FIG. 4B. In some embodiments, the multi-carrier scheduling module 415-c is a component of the base station 105-d in communication with some or all of the other components of the base station 105-d via a bus. Alternatively, functionality of the multi-carrier scheduling module 415-c may be implemented as a component of the transceiver module 750, as a computer program product, as one or more controller elements of the processor module 760, or as a an element of the communications management module 740.

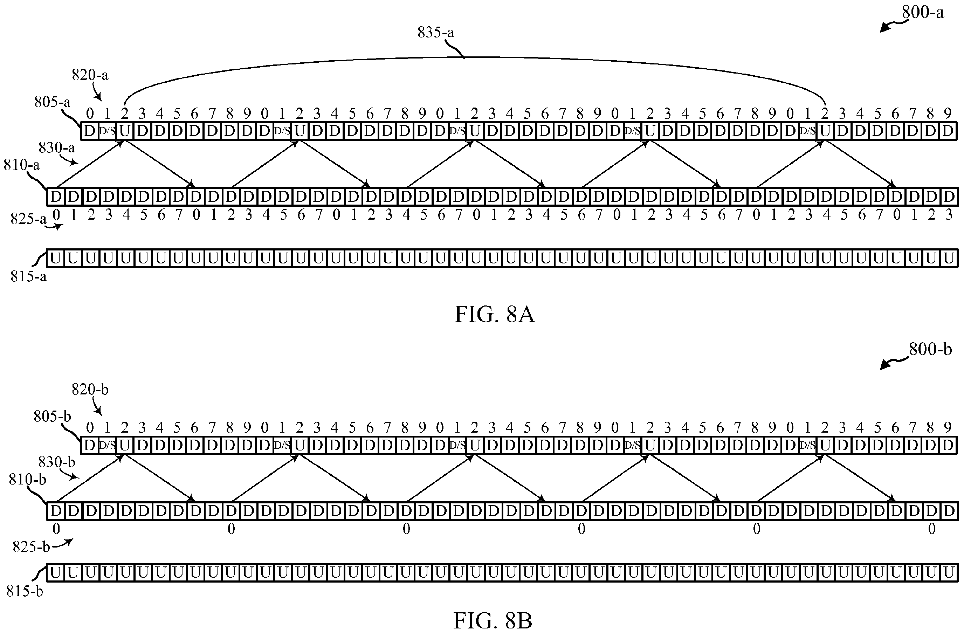

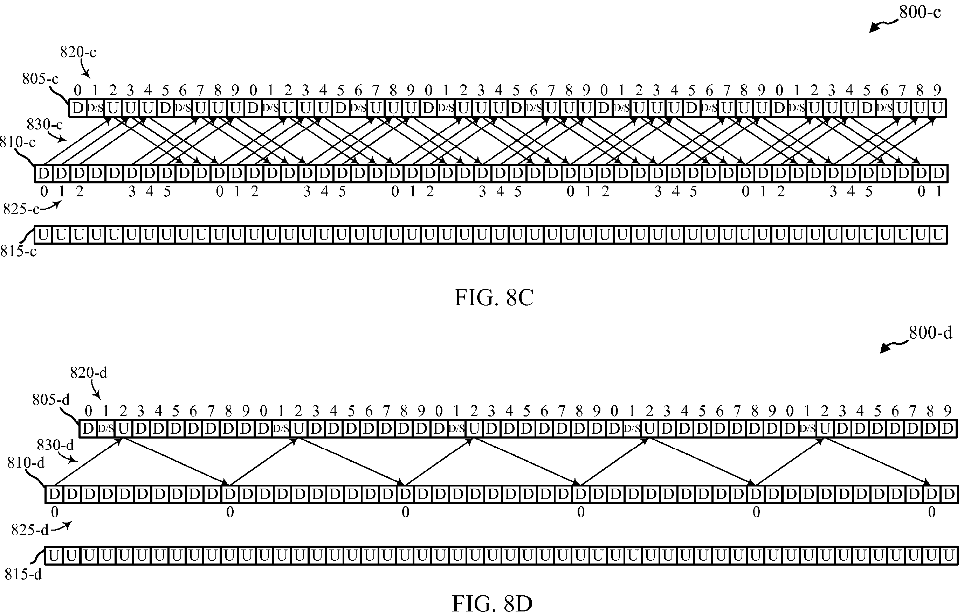

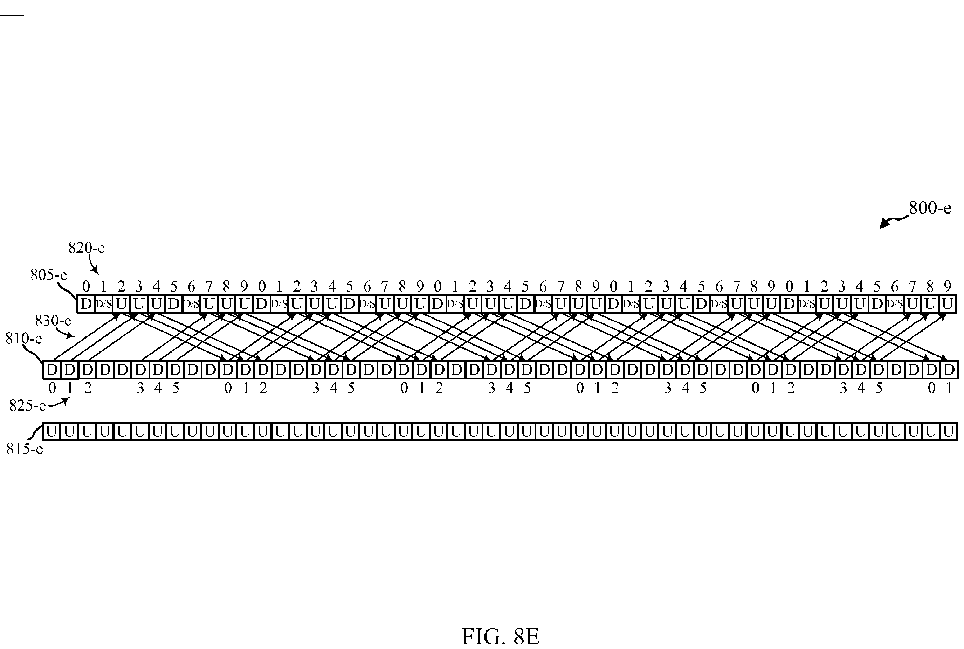

Turning now to **FIGS. 8A, 8B****,** **8C, 8D****,** and **8E****,** which show diagrams of FDD-TDD CA according to various embodiments. FIG. 8A depicts a set of CCs 800-a. The CCs 800-a include a TDD SCC 805-a (with a DL/UL configuration 5), an FDD DL PCC 810-a, and an FDD UL PCC 815-a. The TDD SCC 805-a has a subframe configuration 820-a of 10 ms, and the FDD DL PCC 810-a has UL HARQ process identification 825-a. A grant may be transmitted, and a corresponding UL subframe sent, as shown with arrows 830-a. In 800-a, the FDD DL PCC 810-a has an UL HARQ periodicity of 8 ms. Thus, if a 4 ms gap is employed between a TDD UL subframe and an ACK/NAK, a particular HARQ process may have an RTT of 40 ms.

FIG. 8B depicts a set of CCs 800-b. The set of CCs 800-b includes a TDD SCC 805-b (with a DL/UL configuration 5), an FDD DL PCC 810-b, and an FDD UL PCC 815-b. The TDD SCC 805-b has a subframe configuration 820-b of 10 ms, and the FDD DL PCC 810-b has UL HARQ process identification 825-b. A grant may be sent, and a corresponding UL subframe transmitted, as shown with arrows 830-b. According to the present disclosure, FIG. 8B shows an adjustment to the TDD SCC HARQ timeline such that the number of HARQ processes are based on the TDD SCC DL/UL configuration. In 800-b, the TDD UL SCC 805-b has an UL HARQ periodicity of 10 ms. In 800-a, a UL grant in each 10 ms is associated with UL HARQ processes 0, 2, 4, 6, 0,... etc. In 800-b, a UL grant in each 10 ms is associated with UL HARQ process 0. A 4 ms gap is employed between a TDD UL subframe and an ACK/NAK. Thus, in 800-b, HARQ retransmission for a particular HARQ process may have a delay less than that of 800-a *(e.g.,* 10 ms rather than 40 ms).

FIG. 8C depicts a set of CCs 800-c. The set of CCs 800-c includes a TDD SCC 805-c (with a DL/UL configuration 0), an FDD DL PCC 810-c, and an FDD UL PCC 815-c. The TDD SCC 805-c has a subframe configuration 820-c of 10 ms, and the FDD DL PCC 810-c has UL HARQ process identification 825-c. A grant may be sent, and a corresponding UL subframe transmitted, as shown with arrows 830-c. In 800-c, the TDD UL 805-c has an UL HARQ periodicity of 10 ms. In 800-c, a UL grant in every 10 ms is associated with a fixed UL HARQ process 0, 1, 2, 3, 4, or 5. A 4 ms gap is employed between a TDD UL subframe and an ACK/NAK. Thus, in 800-c, HARQ retransmission for a particular HARQ process may have a delay less than that of 800-a *(e.g.,* 10 ms rather than 40 ms).

FIG. 8D depicts a set of CC 800-d. The set of CC 800-d includes a TDD SCC 805-d (with a DL/UL configuration 5), an FDD DL PCC 810-d, and an FDD UL PCC 815-d. The TDD SCC 805-d has a subframe configuration 820-d of 10 ms, and the FDD DL PCC 810-d has UL HARQ process identification 825-d. A grant may be sent, and a corresponding UL subframe transmitted, as shown with arrows 830-d. In 800-d, the TDD UL 805-d has an UL HARQ periodicity of 10 ms. A 6 ms gap is employed between a TDD UL subframe and an ACK/NAK. In 800-d, HARQ retransmission for a particular HARQ process may have a delay less than that of 800-a *(e.g.,* 10 ms rather than 40 ms).

FIG. 8E depicts a set of CCs 800-e. The set of CCs 800-e includes a TDD SCC 805-e (with a DL/UL configuration 0), an FDD DL PCC 810-e, and an FDD UL PCC 815-e. The TDD SCC 805-e has a subframe configuration 820-e of 10 ms, and the FDD DL PCC 810-e has UL HARQ process identification 825-e. A grant may be sent, and a corresponding UL subframe transmitted, as shown with arrows 830-e. In 800-e, the TDD UL 805-e has an UL HARQ periodicity of 10 ms. A 6 ms gap is employed between a TDD UL subframe and an ACK/NAK. In 800-e, HARQ retransmission for a particular HARQ process may have a delay less than that of 800-a *(e.g.,* 10 ms rather than 40 ms).

Those skilled in the art will recognize that the scheduling timing described above *(e.g.,* a TDD UL subframe sent 4 ms after a grant, ACK/NAK sent 6 ms after the TDD UL subframe, and a subsequent TDD UL subframe sent 4 ms after a NAK; or a TDD UL subframe sent 4 ms after a grant, ACK/NAK sent 4 ms after the TDD UL subframe, and a subsequent TDD UL subframe sent 6 ms after a NAK) may apply to any DL/UL configuration, and it may result in a 10 ms HARQ delay when UL HARQ periodicity corresponds to the TDD SCC subframe configuration.

In some embodiments, the number of UL HARQ processes equals the number of UL subframes in a frame based on the DL/UL configuration. Table 2 shows the number of UL HARQ processes for each TDD SCC DL/UL configuration.

**Table 2: UL HARQ Processes per TDD DL/UL Configuration**

| **TDD SCC DL/UL Configuration** | **Number of UL HARQ Processes** |
|---|---|
| 0 | 6 |
| 1 | 4 |
| 2 | 2 |
| 3 | 3 |
| 4 | 2 |
| 5 | 1 |
| 6 | 5 |

According to some embodiments, for the DL, a grant and a data transmission are in the same subframe and asynchronous HARQ is employed. In such cases, no strict DL HARQ timeline or periodicity is defined. But, in some instances, a number of DL HARQ processes may be defined. For example, the number of HARQ processes may be defined such that the same HARQ process can be reused in a first available DL subframe separated by at least eight milliseconds (8 ms) from the previous transmission of the same HARQ process. Table 3 shows the number of DL HARQ processes for each TDD SCC DL/UL configuration for such cases.

**Table 3: DL HARQ Processes per TDD DL/UL Configuration**

| **TDD SCC DL/UL Configuration** | **Number of DL HARQ Processes** |
|---|---|
| 0 | 4 |
| 1 | 6 |
| 2 | 7 |
| 3 | 7 |
| 4 | 8 |
| 5 | 8 |
| 6 | 5 or 6^{∗} |

| | |
|---|---|
| ^{∗}For some embodiments, such as those employing LTE Release 8 soft buffer partitioning. | |

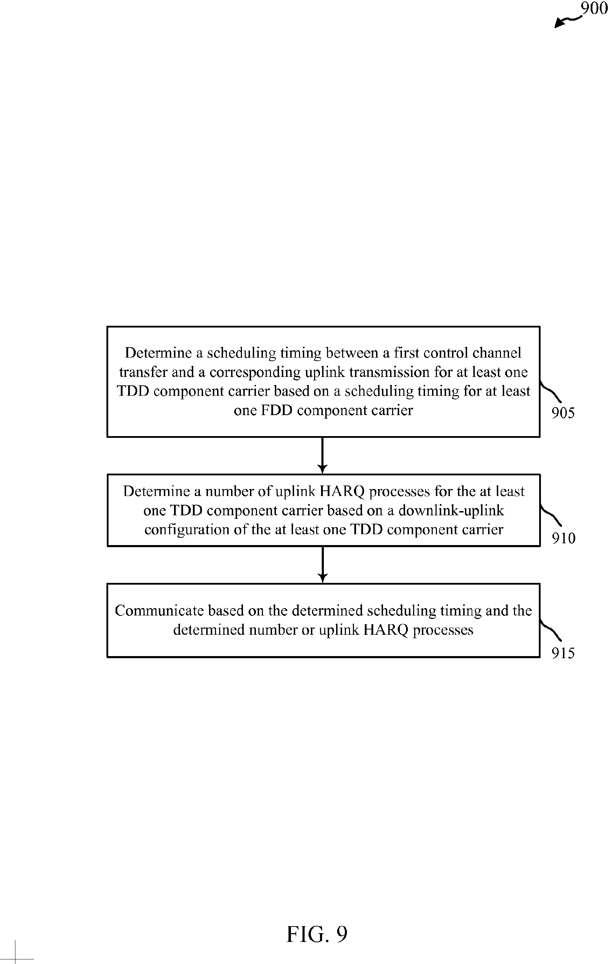

Next, **FIG. 9** shows a flow diagram of a method 900 for performing HARQ for FDD-TDD CA according to various embodiments. The method 900 may be implemented by the base stations 105 and UEs 115 of FIG. 1, FIG. 3, FIG. 5, FIG. 6 or FIG. 7 or by the devices 405 and 405-a of FIGS. 4A and 4B.

At block 905, the method may include determining a scheduling timing between a first control channel transfer and a corresponding uplink transmission for a TDD CC based on a scheduling timing for the an FDD CC. The operations at block 905 may, in some embodiments, be performed by the multi-carrier scheduling modules 415 of FIGS. 4A, 4B, 6, or 7 or by the timing determination module 450 of FIG. 4B. The scheduling timing may be a 4 ms gap. In some embodiments, the TDD CC is an SCC and the FDD CC is a PCC. The control channel transfer may be a resource grant on PDCCH or EPDCCH.

At block 910, the method may involve determining a number of UL HARQ processes for the TDD CC based on a DL/UL configuration of the TDD CC. The operations at block 910 may be performed by the multi-carrier scheduling modules 415 of FIGS. 4A, 4B, 6, or 7 or the HARQ determination module 470 of FIG. 4B. In some embodiments, the determined number of uplink subframes of a common UL HARQ process includes 10 ms gap.

At block 915, the method may include communicating based on the determined scheduling timing and the determined number of uplink HARQ processes. The operations at block 915 are, in various embodiments, performed by the receiver modules 410 of FIGS. 4A or 4B, the transmitter modules 420 of FIGS. 4A or 4B, the transceiver module 610 of FIG. 6, or the transceiver module 750 of FIG. 7.

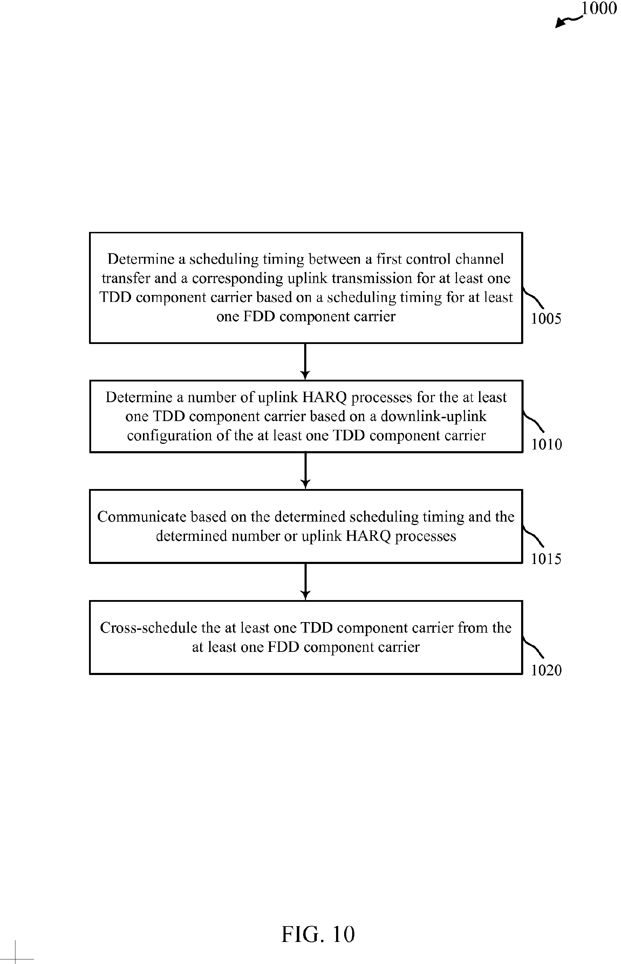

Next, **FIG. 10** depicts a flow diagram of a method 1000 for performing HARQ in FDD-TDD CA according to various embodiments. The method 1000 may be implemented by the base stations 105 and UEs 115 of FTG. 1, FTG. 3, FTG. 5, FTG. 6 or FTG. 7 or by the devices 405 and 405-a of FIGS. 4A and 4B.

At block 1005, the method may include determining a scheduling timing between a first control channel transfer and a corresponding uplink transmission for a TDD CC based on a scheduling timing for the an FDD CC. The operations at block 1005 may be, in some embodiments, performed by the multi-carrier scheduling modules 415 of FIGS. 4A, 4B, 6, or 7 or by the timing determination module 450 of FIG. 4B.

At block 1010, the method may involve determining a number of UL HARQ processes for the TDD CC based on a DL/UL configuration of the TDD CC. The operations at block 1010 may be performed by the multi-carrier scheduling modules 415 of FIGS. 4A, 4B, 6, or 7 or the HARQ determination module 470 of FIG. 4B.

At block 1015, the method may include communicating based on the determined scheduling timing and the determined number of uplink HARQ processes. The operations at block 1015 are, in various embodiments, performed by the receiver modules 410 of FIGS. 4A or 4B, the transmitter modules 420 of FIGS. 4A or 4B, the transceiver module 610 of FIG. 6, or the transceiver module 750 of FIG. 7.

At block 1020, the method may include cross carrier scheduling transmissions on the TDD CC from the FDD CC. The operations of block 1020 are, in some cases, performed by the multi-carrier scheduling modules 415 of FIGS. 4A, 4B, 6, or 7 or by the cross scheduling module 470 of FIG. 4B.

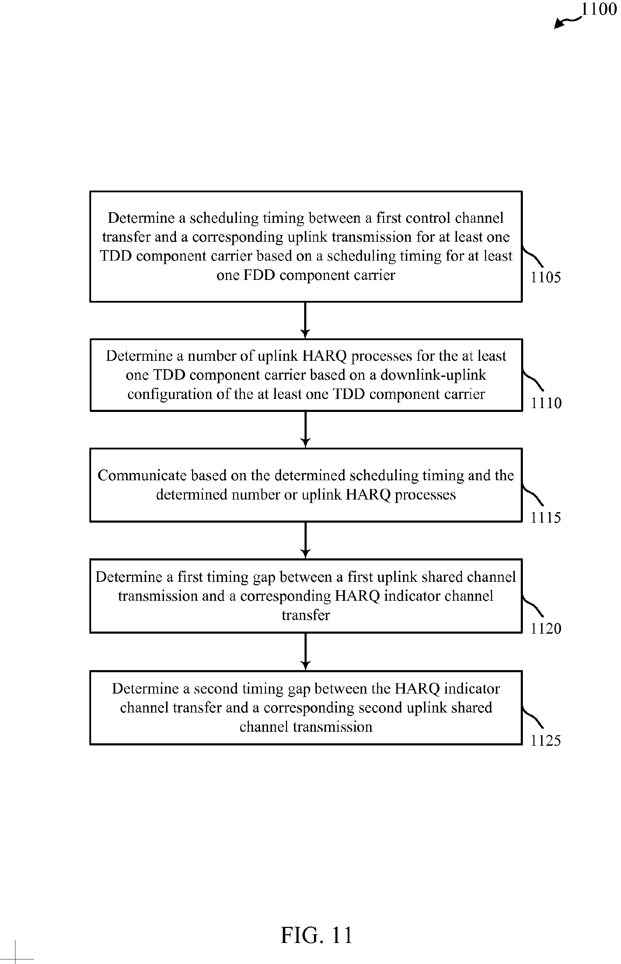

**FIG. 11** shows a flow diagram of a method 1100 for multi-carrier scheduling according to various embodiments. The method 1100 may be implemented by the base stations 105 and UEs 115 of FIG. 1, FIG. 3, FIG. 5, FIG. 6 or FIG. 7 or by the devices 405 and 405-a of FIGS. 4A and 4B.

At block 1105, the method may include determining a scheduling timing between a first control channel transfer and a corresponding uplink transmission for a TDD CC based on a scheduling timing for the an FDD CC. The operations at block 1105 may be, in some embodiments, performed by the multi-carrier scheduling modules 415 of FIGS. 4A, 4B, 6, or 7 or by the timing determination module 450 of FIG. 4B.

At block 1110, the method may involve determining a number of UL HARQ processes for the TDD CC based on a DL/UL configuration of the TDD CC. The operations at block 1110 may be performed by the multi-carrier scheduling modules 415 of FIGS. 4A, 4B, 6, or 7 or the HARQ determination module 470 of FIG. 4B.

At block 1115, the method may include communicating based on the determined scheduling timing and the determined number of uplink HARQ processes. The operations at block 1115 are, in various embodiments, performed by the receiver modules 410 of FIGS. 4A or 4B, the transmitter modules 420 of FIGS. 4A or 4B, the transceiver module 610 of FIG. 6, or the transceiver module 750 of FIG. 7.

At block 1120, the method may involve determining a first timing gap between a first UL shared channel transmission and a corresponding HARQ indicator channel transfer *(e.g.,* an ACK/NAK). The operations of block 1120 may be performed by the multi-carrier scheduling modules 415 of FIGS. 4A, 4B, 6, or 7 or the timing gap determination module 480 of FIG. 4B. In some embodiments, the determined first timing gap is 6 ms. In other cases, the determined first timing gap is four milliseconds 4 ms.

At block 1125, the method may further involve determining a second timing gap between the HARQ indicator channel transfer (e.g., NAK) and a corresponding second uplink shared channel transmission, which may be a HARQ retransmission. The operations of block 1125 may be performed by the multi-carrier scheduling modules 415 of FIGS. 4A, 4B, 6, or 7 or the timing gap determination module 480 of FIG. 4B. In some instances, the determined first timing gap is four milliseconds 4 ms. But in other embodiments, the determined first timing gap is 6 ms.

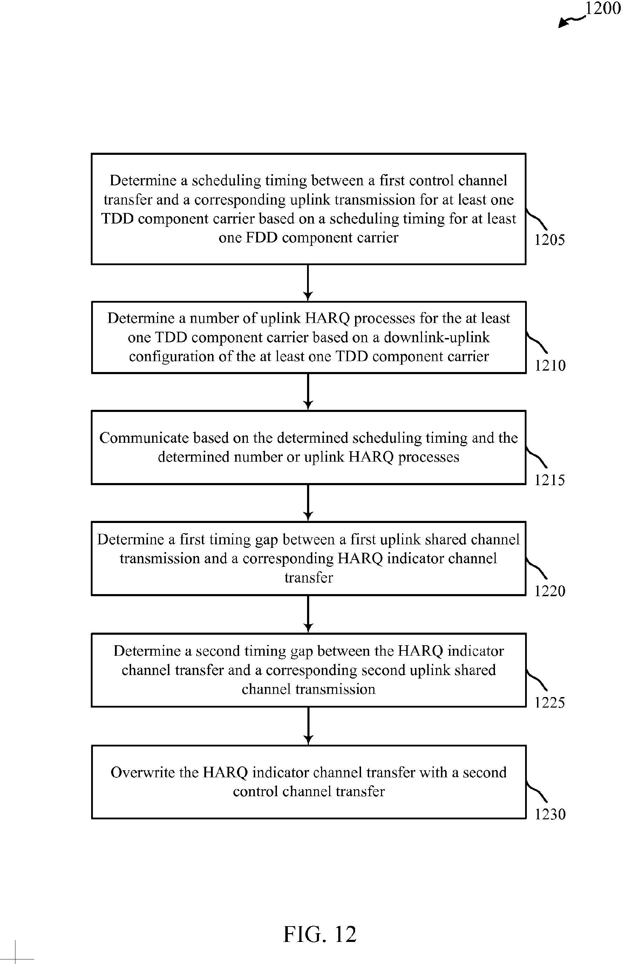

**FIG. 12** shows a flow diagram of a method 1200 for multi-carrier scheduling according to various embodiments. The method 1200 may be implemented by the base stations 105 and UEs 115 of FIG. 1, FIG. 3, FIG. 5, FIG. 6 or FIG. 7 or by the devices 405 and 405-a of FIGS. 4A and 4B.

At block 1205, the method may include determining a scheduling timing between a first control channel transfer and a corresponding uplink transmission for a TDD CC based on a scheduling timing for the an FDD CC. The operations at block 1205 may be, in some embodiments, performed by the multi-carrier scheduling modules 415 of FIGS. 4A, 4B, 6, or 7 or by the timing determination module 450 of FIG. 4B.

At block 1210, the method may involve determining a number of UL HARQ processes for the TDD CC based on a DL/UL configuration of the TDD CC. The operations at block 1210 may be performed by the multi-carrier scheduling modules 415 of FIGS. 4A, 4B, 6, or 7 or the HARQ determination module 470 of FIG. 4B.

At block 1215, the method may include communicating based on the determined scheduling timing and the determined number of uplink HARQ processes. The operations at block 1215 are, in various embodiments, performed by the receiver modules 410 of FIGS. 4A or 4B, the transmitter modules 420 of FIGS. 4A or 4B, the transceiver module 610 of FIG. 6, or the transceiver module 750 of FIG. 7.

At block 1220, the method may involve determining a first timing gap between a first UL shared channel transmission and a corresponding HARQ indicator channel transfer *(e.g.,* an ACK/NAK). The operations of block 1220 may be performed by the multi-carrier scheduling modules 415 of FIGS. 4A, 4B, 6, or 7 or the timing gap determination module 480 of FIG. 4B.

At block 1225, the method may further involve determining a second timing gap between the HARQ indicator channel transfer (e.g., NAK) and a corresponding second uplink shared channel transmission, which may be a HARQ retransmission. The operations of block 1225 may be performed by the multi-carrier scheduling modules 415 of FIGS. 4A, 4B, 6, or 7 or the timing gap determination module 480 of FIG. 4B.

At block 1230, the method may also include overwriting the HARQ indicator channel transfer (*e.g*., ACK/NAK) with a second control channel transfer. The operation of block 1230 may be performed by the multi-carrier scheduling modules 415 of FIGS. 4A, 4B, 6, or 7 or the overwrite module 490 of FIG. 4B. In some cases, the second control channel transfer is a grant on PDCCH or EPDCCH sent 2 ms (or two subframes) after the ACK/NAK. In other embodiments, the second control channel transfer is a grant sent on PDCCH or EPDCCH in the same subframe as the ACK/NAK.

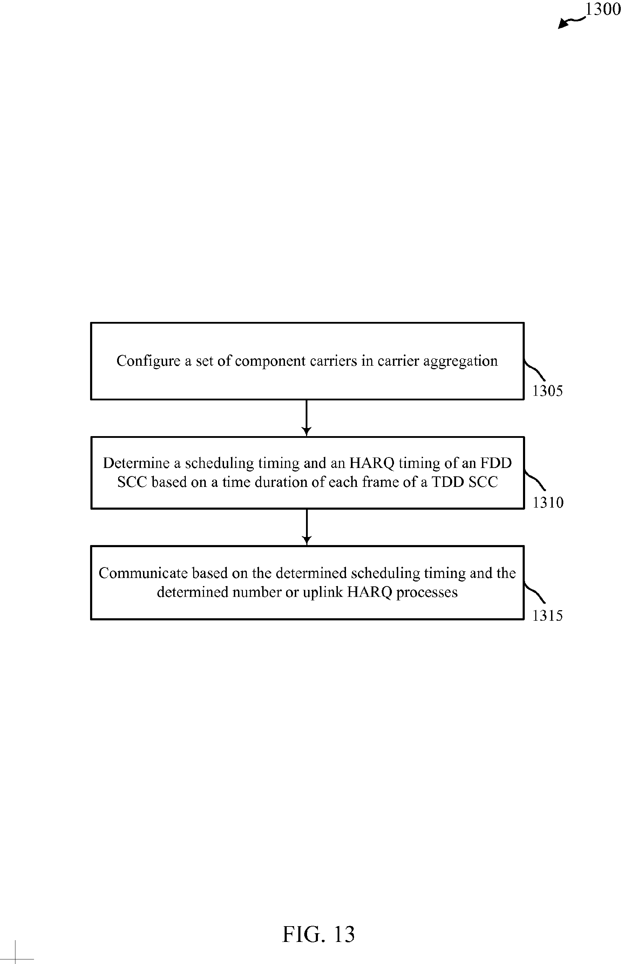

Next, **FIG. 13** shows a flow diagram of a method 1300 for multi-carrier scheduling according to various embodiments. The method 1300 may be implemented by the base stations 105 and UEs 115 of FTG. 1, FTG. 3, FTG. 5, FTG. 6 or FTG. 7 or by the devices 405 and 405-a of FIGS. 4A and 4B.

At block 1305, the method may include configuring a set of component carriers in carrier aggregation. In some examples, this may include configuring component carriers by a base station; and the configuration may be indicated to a UE—*e.g.*, via RRC signaling. In other cases, a UE may determine a configuration of a set of component carriers—*e.g.*, via received RRC signaling. The set of component carriers may include a TDD SCC and an FDD SCC, which may be cross-carrier scheduled from one another. The operation of block 1305 may be performed by the multi-carrier scheduling modules 415 of FIGS. 4A, 4B, 6, or 7 or by the cross scheduling module 470 of FIG. 4B.

At block 1310, the method may include determining a scheduling timing an UL HARQ timing of an FDD SCC based, wholly or partially, on a time duration of a TDD SCC. In some examples, a UE may identify scheduling timing and UL HARQ timing based on RRC signaling from a base station. The operation of block 1310 may be performed by the multi-carrier scheduling modules 415 of FIGS. 4A, 4B, 6, or 7, by the timing determination module 450 of FIG. 4B, or by the HARQ determination module 460 of FIG. 4B.

At block 1315, the method may include communicating based on the determined scheduling timing and the determined number of UL HARQ process. The operation of block 1315 may be performed by the receiver modules 410 of FIGS. 4A or 4B, the transmitter modules 420 of FIGS. 4A or 4B, the transmitter module 610 and the receiver module 615 of FIG. 6, or the transceiver modules 750 of FIG. 7.

Those skilled in the art will recognize that the methods 900, 1000, 1100, 1200 and 1300 are example implementations of the tools and techniques described herein. The methods may be performed with more or fewer steps; and they may be performed in an order other than indicated.

The detailed description set forth above in connection with the appended drawings describes exemplary embodiments and does not represent the only embodiments that may be implemented or that are within the scope of the claims.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and modules described in connection with the disclosure herein may be implemented or performed with a general-purpose processor, a digital signal processor (DSP), an application-specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, multiple microprocessors, one or more microprocessors in conjunction with a DSP core, or any other such configuration.

The functions described herein may be implemented in hardware, software/firmware, or combinations thereof. If implemented in software/firmware , the functions may be stored on or transmitted over as one or more instructions or code on a computer-readable medium. Other examples and implementations are within the scope of the disclosure and appended claims. For example, due to the nature of software/firmware, functions described above can be implemented using software/firmware executed by, *e.g.,* a processor, hardware, hardwiring, or combinations thereof. Features implementing functions may also be physically located at various positions, including being distributed such that portions of functions are implemented at different physical locations. Also, as used herein, including in the claims, "or" as used in a list of items prefaced by "at least one of' indicates a disjunctive list such that, for example, a list of "at least one of A, B, or C" means A or B or C or AB or AC or BC or ABC *(i.e.,* A and B and C).

Computer-readable media includes both computer storage media and communication media including any medium that facilitates transfer of a computer program from one place to another. A storage medium may be any available medium that can be accessed by a general-purpose or special-purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the generic principles defined herein may be applied to other variations without departing from the teachings of the disclosure.

The scope of the invention is defined in the appended claims.

## Claims

1. A method of wireless communication for a system that supports a set of component carriers in carrier aggregation, wherein the set of component carriers comprise a frequency-division duplexing, FDD, primary component carrier, PCC, and a time-division duplexing, TDD, secondary component carrier, SCC, the method comprising, at a user equipment:
determining a downlink/uplink, DL/UL, configuration for the TDD-SCC;
identifying a scheduling timing between a first uplink grant and a corresponding uplink transmission for the TDD SCC based on a scheduling time of the FDD PCC;
determining an uplink hybrid automatic repeat request, HARQ, timing of the TDD SCC based at least in part on a frame period of the TDD SCC, wherein a number of subframes in the frame period of the TDD SCC is determined by the DL/UL configuration for the TDD-SCC, and
wherein the determining the HARQ timing of the TDD SCC further comprises:
determining the uplink HARQ timing of the TDD SCC such that the aggregate of
1) a number of subframes between the corresponding uplink transmission and corresponding ACK/NAK indicators, and
2) a number of subframes between ACK/NAK indicators and HARQ process retransmissions without additional grant being received in a downlink control channel transfer corresponds to the number of subframes in the frame period of the TDD SCC; and **characterised by**
communicating with a node based on the identified scheduling timing and on the determined uplink HARQ timing of the TDD SCC, without an additional grant being received in a downlink control channel after the ACK/NAK indicators and before the HARQ process retransmissions.

2. The method of claim 1, wherein the frame period of the TDD SCC is ten milliseconds.

3. The method of claim 1, wherein the scheduling timing of the FDD PCC is four milliseconds.

4. The method of claim 1, wherein:
the scheduling timing of the FDD PCC comprises a time difference between an uplink grant or physical hybrid indicator channel, PHICH, transmission and a physical uplink shared channel, PUSCH, transmission.

5. The method of claim 1, wherein the TDD SCC is cross-carrier scheduled from the FDD PCC.

6. The method of claim 1, wherein the determined downlink-uplink, DL/UL, configuration is selected from a plurality of DL/UL configurations.

7. An apparatus for wireless communication for a system that supports a set of component carriers in carrier aggregation, wherein the set of component carriers comprise a frequency-division duplexing, FDD, primary component carrier, PCC, and a time-division duplexing, TDD, secondary component carrier, SCC, the apparatus comprising:
means for determining a downlink/uplink, DL/UL, configuration for the TDD-SCC;
means for identifying a scheduling timing between a first uplink grant and a corresponding uplink transmission for the TDD SCC based on a scheduling time of the FDD PCC;
means for determining an uplink hybrid automatic repeat request, HARQ, timing of the TDD SCC based at least in part on a frame period of the TDD SCC, wherein a number of subframes in the frame period of the TDD SCC is determined by the DL/UL configuration for the TDD-SCC, and
wherein the determining the uplink HARQ timing of the TDD SCC further comprises:
determining the HARQ timing of the TDD SCC such that the aggregate of
1) a number of subframes between the corresponding uplink transmission and corresponding ACK/NAK indicators, and
2) a number of subframes between ACK/NAK indicators and HARQ process retransmissions without additional grant being received in a downlink control channel transfer corresponds to the number of subframes in the frame period of the TDD SCC; and **characterised by** further comprising
means for communicating with a node based on the identified scheduling timing and on the determined uplink HARQ timing of the TDD SCC, without an additional grant being received in a downlink control channel after the ACK/NAK indicators and before the HARQ process retransmissions.

## Patentansprüche

1. Ein Verfahren für Drahtloskommunikation für ein System, das ein Satz von Komponententrägern in Trägeraggregation unterstützt, wobei der Satz von Komponententrägern einen Frequenzduplexing-Primärkomponententräger bzw. FDD-PCC (FDD = frequency-division duplexing, PCC = primary component carrier) und einen Zeitduplexing-Sekundärkomponententräger bzw. TDD-SCC (TDD = time-division duplexing, SCC = secondary component carrier) aufweist, wobei das Verfahren Folgendes aufweist:
an einer Nutzereinrichtung:
Bestimmen einer Abwärtsstrecken/Aufwärtsstrecken- bzw. DL/UL-Konfiguration (DL = downlink, UL = uplink) für den TDD-SCC;
Identifizieren eines Einteilungs-Timings zwischen einer ersten Uplink- bzw. Aufwärtsstreckenzuteilung und einer entsprechenden Aufwärtsstreckensendung für den TDD-SCC basierend auf einer Einteilungszeit des FDD-PCC; Bestimmen eines Aufwärtsstrecken-HARQ-Timings (HARQ = hybrid automatic repeat request) des TDD-SCC basierend wenigstens teilweise auf einer Rahmenperiode des TDD-SCC, wobei eine Anzahl von Subrahmen in der Rahmenperiode des TDD-SCC durch die DL/UL-Konfiguration für den TDD-SCC bestimmt wird, und
wobei das Bestimmen des HARQ-Timings des TDD-SCC weiter Folgendes aufweist:
Bestimmen des Aufwärtsstrecken-HARQ-Timings des TDD-SCC, so dass das Aggregat von 1) einer Anzahl von Subrahmen zwischen der entsprechenden Aufwärtsstreckensendung und entsprechenden ACK/NAK-Indikatoren, und 2) einer Anzahl von Subrahmen zwischen ACK/NAK-Indikatoren und HARQ-Prozess-Neusendungen ohne zusätzliche Zuteilung, die in einem Abwärtsstreckensteuerkanaltransfer empfangen werden, der Anzahl von Subrahmen in der Rahmenperiode des TDD-SCC entspricht; und
das **gekennzeichnet ist durch**
Kommunizieren mit einem Knoten basierend auf dem identifizierten Einteilungs-Timing und auf dem bestimmten Aufwärtsstrecken-HARQ-Timing des TDD-SCC, ohne dass eine zusätzliche Zuteilung in einem Abwärtsstreckensteuerkanal nach den ACK/NAK-Indikatoren und vor den HARQ-Prozess-Neusendungen empfangen wird.

2. Verfahren nach Anspruch 1, wobei die Rahmenperiode des TDD-SCC zehn Millisekunden ist.

3. Verfahren nach Anspruch 1, wobei das Einteilungs-Timing des FDD-PCC vier Millisekunden ist.

4. Verfahren nach Anspruch 1, wobei:
das Einteilungs-Timing des FDD-PCC eine Zeitdifferenz zwischen einer Aufwärtsstreckenzuteilung oder PHICH-Sendung (PHICH = physical hybrid indicator channel bzw. physischer Hybridindikatorkanal) und einer PUSCH-Sendung (PUSCH = physical uplink shared channel bzw. physischer gemeinsam genutzter Aufwärtsstreckenkanal) aufweist.

5. Verfahren nach Anspruch 1, wobei der TDD-SCC über Träger hinweg von dem FDD-PCC eingeteilt ist.

6. Verfahren nach Anspruch 1, wobei die bestimmte Abwärtsstrecken-Aufwärtsstrecken- bzw. DL/UL-Konfiguration (DL = downlink, UL = uplink) aus einer Vielzahl von DL/UL-Konfigurationen ausgewählt ist.

7. Eine Vorrichtung für Drahtloskommunikation für ein System, das ein Satz von Komponententrägern in Trägeraggregation unterstützt, wobei der Satz von Komponententrägern einen Frequenzduplexing-Primärkomponententräger bzw. FDD-PCC (FDD = frequency-division duplexing, PCC = primary component carrier) und einen Zeitduplexing-Sekundärkomponententräger bzw. TDD-SCC (TDD-SCC = time-division duplexing secondary component carrier) aufweist, wobei die Vorrichtung Folgendes aufweist:
Mittel zum Bestimmen einer Abwärtsstrecken/Aufwärtsstrecken- bzw. DL/UL-Konfiguration (DL = downlink, UL = uplink) für den TDD-SCC;
Mittel zum Identifizieren eines Einteilungs-Timings zwischen einer ersten Uplink- bzw. Aufwärtsstreckenzuteilung und einer entsprechenden Aufwärtsstreckensendung für den TDD-SCC basierend auf einer Einteilungszeit des FDD-PCC;
Mittel zum Bestimmen eines Aufwärtsstrecken-HARQ-Timings (HARQ = hybrid automatic repeat request) des TDD-SCC basierend wenigstens teilweise auf einer Rahmenperiode des TDD-SCC, wobei eine Anzahl von Subrahmen in der Rahmenperiode des TDD-SCC durch die DL/UL-Konfiguration für den TDD-SCC bestimmt wird, und
wobei das Bestimmen des Aufwärtsstrecken-HARQ-Timings des TDD-SCC weiter Folgendes aufweist:
Bestimmen des Aufwärtsstrecken-HARQ-Timings des TDD-SCC, so dass das Aggregat von 1) einer Anzahl von Subrahmen zwischen der entsprechenden Aufwärtsstreckensendung und entsprechenden ACK/NAK-Indikatoren, und 2) einer Anzahl von Subrahmen zwischen ACK/NAK-Indikatoren und HARQ-Prozess-Neusendungen ohne zusätzliche Zuteilung, die in einem Abwärtsstreckensteuerkanaltransfer empfangen werden, der Anzahl von Subrahmen in der Rahmenperiode des TDD-SCC entspricht; und die **dadurch gekennzeichnet ist, dass** sie weiter Folgendes aufweist Mittel zum Kommunizieren mit einem Knoten basierend auf dem identifizierten Einteilungs-Timing und auf dem bestimmten Aufwärtsstrecken-HARQ-Timing des TDD-SCC, ohne dass eine zusätzliche Zuteilung in einem Abwärtsstreckensteuerkanal nach den ACK/NAK-Indikatoren und vor den HARQ-Prozess-Neusendungen empfangen wird.

## Revendications

1. Un procédé de communication sans fil destiné à un système qui prend en charge un ensemble de porteuses de composant dans une agrégation de porteuses, où l'ensemble de porteuses de composant comprend une porteuse de composant primaire, PCC, à duplexage par répartition en fréquence, FDD, et une porteuse de composant secondaire, SCC, à duplexage par répartition dans le temps, TDD, le procédé comprenant, au niveau d'un équipement d'utilisateur :
la détermination d'une configuration en liaison descendante/liaison montante, DL/UL, pour la SCC-TDD,
l'identification d'un temps de planification entre un premier octroi en liaison montante et une transmission en liaison montante correspondante pour la SCC-TDD en fonction d'une heure de planification de la PCC-FDD,
la détermination d'un temps de demande de répétition automatique hybride, HARQ, en liaison montante de la SCC-TDD en fonction au moins en partie d'une période de trame de la SCC-TDD, où un nombre de sous-trames dans la période de trame de la SCC-TDD est déterminé par la configuration DL/UL pour la SCC-TDD, et
où la détermination du temps HARQ de la SCC-TDD comprend en outre :
la détermination du temps HARQ en liaison montante de la SCC-TDD de sorte que l'agrégation de
1) un nombre de sous-trames entre la transmission en liaison montante correspondante et des indicateurs ACK/NAK correspondants, et
2) un nombre de sous-trames entre des indicateurs ACK/NAK et des retransmissions de procédé HARQ sans la réception d'un octroi additionnel dans un transfert de canal de commande en liaison descendante
corresponde au nombre de sous-trames dans la période de trame de la SCC-TDD, et **caractérisé par**
la communication avec un nœud en fonction du temps de planification identifié et du temps HARQ en liaison montante déterminé de la SCC-TDD, sans la réception d'un octroi additionnel dans un canal de commande en liaison descendante après les indicateurs ACK/NAK et avant les retransmissions de procédé HARQ.

2. Le procédé selon la Revendication 1, où la période de trame de la SCC-TDD est de dix millisecondes.

3. Le procédé selon la Revendication 1, où le temps de planification de la PCC-FDD est de quatre millisecondes.

4. Le procédé selon la Revendication 1, où :
le temps de planification de la PCC-FDD comprend une différence temporelle entre un octroi en liaison montante ou une transmission de canal indicateur hybride physique, PHICH, et une transmission de canal partagé en liaison montante physique, PUSCH.

5. Le procédé selon la Revendication 1, où la SCC-TDD est planifiée interporteuses à partir de la PCC-FDD.

6. Le procédé selon la Revendication 1, où la configuration en liaison descendante/liaison montante, DL/UL, déterminée est sélectionnée à partir d'une pluralité de configurations DL/UL.

7. Un appareil de communication sans fil destiné à un système qui prend en charge un ensemble de porteuses de composant dans une agrégation de porteuses, où l'ensemble de porteuses de composant comprend une porteuse de composant primaire, PCC, à duplexage par répartition en fréquence, FDD, et une porteuse de composant secondaire, SCC, à duplexage par répartition dans le temps, TDD, l'appareil comprenant :
un moyen de détermination d'une configuration en liaison descendante/liaison montante, DL/UL, pour la SCC-TDD,
un moyen d'identification d'un temps de planification entre un premier octroi en liaison montante et une transmission en liaison montante correspondante pour la SCC-TDD en fonction d'une heure de planification de la PCC-FDD,
un moyen de détermination d'un temps de demande de répétition automatique hybride, HARQ, en liaison montante de la SCC-TDD en fonction au moins en partie d'une période de trame de la SCC-TDD, où un nombre de sous-trames dans la période de trame de la SCC-TDD est déterminé par la configuration DL/UL pour la SCC-TDD, et
où la détermination du temps HARQ en liaison montante de la SCC-TDD comprend en outre :
la détermination du temps HARQ de la SCC-TDD de sorte que l'agrégation de
1) un nombre de sous-trames entre la transmission en liaison montante correspondante et des indicateurs ACK/NAK correspondants, et
2) un nombre de sous-trames entre des indicateurs ACK/NAK et des retransmissions de procédé HARQ sans la réception d'un octroi additionnel dans un transfert de canal de commande en liaison descendante
corresponde au nombre de sous-trames dans la période de trame de la SCC-TDD, et
**caractérisé en ce qu'**il comprend en outre
un moyen de communication avec un nœud en fonction du temps de planification identifié et du temps HARQ en liaison montante déterminé de la SCC-TDD, sans la réception d'un octroi additionnel dans un canal de commande en liaison descendante après les indicateurs ACK/NAK et avant les retransmissions de procédé HARQ.
